# EUROPÄISCHE PATENTSCHRIFT

(11) **EP 3 898 437 B1**
(45) Veröffentlichungstag und Bekanntmachung des Hinweises auf die Patenterteilung: **19.08.2026**
(21) Anmeldenummer: 19818102.6
(22) Anmeldetag: 16.12.2019
(51) Int. Cl.: B65D 17/50, B65D 47/28

(54) **VERSCHLUSSSYSTEM FÜR GETRÄNKEDOSEN**
CLOSURE SYSTEM FOR DRINK CANS
SYSTÈME DE FERMETURE POUR CANETTES DE BOISSON

(30) Priorität: 17.12.2018 EP 18212937
(43) Veröffentlichungstag der Anmeldung: 27.10.2021
(73) Patentinhaber: RE-LID Engineering AG, 9491 Ruggell (LI)
(72) Erfinder: BÜHLER, Alois, 9495 Triesen (LI); SCHANDL, Christian, 2700 Wiener Neustadt (AT)
(74) Vertreter: Vossius & Partner Patentanwälte Rechtsanwälte mbB
(86) Internationale Anmeldenummer: PCT/EP2019/085378
(87) Internationale Veröffentlichungsnummer: WO 2020/127071

(56) Entgegenhaltungen:
- EP-A1- 2 848 547
- WO-A1-2009/062004
- WO-A1-2015/185718
- WO-A1-2020/086567
- DE-A1- 102010 056 552
- US-A1- 2010 126 992

## Beschreibung

Die vorliegende Erfindung betrifft ein Verschlusssystem für Getränkebehälter, insbesondere Getränkedosen. Das erfindungsgemäße Verschlusssystem ermöglicht dabei ein Öffnen und Wiederverschließen des Getränkebehälters.

Getränkedosen sind eine der wichtigsten Handelsverpackungen für Getränke. Sie werden vor allem für kohlensäurehaltige Getränke verwendet, insbesondere für Bier, Limonaden und Energy-Drinks, und weisen in der Regel eine Innendruckfestigkeit von mindestens 6,2 bar auf. Heutzutage verwendende Getränkedosen bestehen zumeist aus einem einteiligen, im wesentlichen zylindrischen Behälter aus Aluminium oder Weißblech und einem - in der Regel aufgefalzten - Deckel aus Aluminium. Um das Öffnen zu erleichtern, weist der Deckel eine meist ovale Ritzlinie auf, sowie eine angenietete Metalllasche, die beim Anheben das angeritzte Oval durch Hebelwirkung ins Doseninnere drückt und so eine Trinköffnung erzeugt. Dieser eingebaute Dosenöffner wird auch als "Stay-On-Tab" bezeichnet.

Die Vorteile von Getränkedosen liegen für den Verbraucher vor allem in ihrem geringen Eigengewicht, in ihrer Unzerbrechlichkeit und in der Möglichkeit, sie nach dem Öffnen direkt als Trinkgefäß zu nutzen. Für Getränkehersteller kommt die hohe Barrierewirkung hinzu, da die Neutralität des Materials für Aromen und die gleichzeitige Lichtschutzwirkung einen guten Schutz auch für empfindliche Produkte bieten und eine lange Haltbarkeit ermöglichen.

Hauptnachteil von Getränkedosen mit "Stay-On-Tab" ist die bislang nicht gegebene Wiederverschließbarkeit. Es wäre daher vorteilhaft, ein Verschlusssystem bereitzustellen, mittels welchem die Vorteile der bekannten Getränkedosen mit einer Wiederverschließbarkeit kombinierbar sind.

In der DE 10 2012 213 093 A1 ist ein wiederverschließbares Verschlusssystem dargestellt. Nachteilig ist, insbesondere im Vergleich mit üblichen "Stay-On-Tab"-Verschlüssen, zum einen der konstruktive Aufwand erheblich größer. Zum anderen ist ein mit einem solchen Verschlusssystem ausgestatteter Deckel deutlich tiefer, sodass eine Stapelbarkeit der Deckel nicht mehr gewährleistet ist, und spezielle Maschinen zum Verbinden der Deckel mit dem Dosen-Zylinderteil nötig sind.

Aus der DE 10 2010 056 552 A1 ist ein Verschluss gemäß dem Oberbegriff des Anspruchs 1 bekannt. WO 2020/086567 A1 (Stand der Technik gemäß Artikel 54(3) EPÜ) offenbart einen Dosendeckel mit einer Belüftungseinrichtung.

Es ist daher eine Aufgabe der Erfindung, ein verbessertes Verschlusssystem für Behälter für Flüssigkeiten oder Schüttgut, insbesondere Getränkedosen oder Kartonagen, bereitzustellen, insbesondere wobei der Behälter, bzw. die Dose, auf einfache Weise wiederverschließbar ist.

Eine weitere Aufgabe ist es, ein solches Verschlusssystem mit einem Garantiesiegel bereitzustellen, das ungeöffnete von wiederverschlossenen Behältern einfach, insbesondere optisch, unterscheidbar macht.

Eine weitere Aufgabe ist es, ein solches Verschlusssystem bereitzustellen, das besonders kompakt ist, insbesondere die Außenmaße des Behälters nicht vergrößert und eine Stapelbarkeit des Behälters nicht beeinträchtigt.

Eine weitere Aufgabe ist es, ein solches Verschlusssystem bereitzustellen, das mit geringem konstruktiven Aufwand herzustellen ist.

Eine weitere Aufgabe ist es, ein solches Verschlusssystem bereitzustellen, das für einen Druck von mindestens 6,2 bar ausgelegt ist.

Eine weitere Aufgabe ist es, einen Dosendeckel für eine Getränkedose mit einem solchen Verschlusssystem und eine Getränkedose mit einem solchen Verschlusssystem bereitzustellen.

Eine weitere Aufgabe ist es, einen solchen Dosendeckel mit einem solchen Verschlusssystem bereitzustellen, wobei der Dosendeckel mit bestehenden Maschinen und Verfahren mit dem übrigen Dosenkörper zu einer Getränkedose verbindbar ist.

Eine weitere Aufgabe ist es, einen solchen Dosendeckel und eine solche Getränkedose bereitzustellen, die stapelbar sind, insbesondere wobei das Verschlusssystem so flach ist, dass die Außenmaße des Dosendeckels bzw. der Getränkedose nicht vergrößert werden oder deren Stapelbarkeit negativ beeinträchtigt wird.

Mindestens eine dieser Aufgaben wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Ein erster Aspekt der vorliegenden Erfindung betrifft ein Verschlusssystem für einen Behälter für Flüssigkeit und/oder Schüttgut, insbesondere für einen Getränkebehälter, beispielsweise eine Getränkedose, gemäß Anspruch 1. Bevorzugte Weiterbildungen werden durch die abhängigen Ansprüche angegeben.

Gemäß einer Ausführungsform weist das Verschlusssystem mindestens ein Sicherungs- und/oder Kontrollelement auf, wobei dieses Kontrollelement derart ausgestaltet ist, dass es
- einen ersten Zustand aufweist, solange das Bedienelement nicht bewegt wird, und/oder das Verschlusselement nicht aus der Verschlussposition bewegt wird, und
- einen vom ersten Zustand zumindest optisch unterscheidbaren zweiten Zustand einnimmt, sobald das Bedienelement in die erste Richtung bewegt wird, bzw. das Verschlusselement aus der Verschlussposition bewegt wird.

Ein solches Sicherungselement, das nicht unbedingt eine Kontrollfunktion bereitstellen muss, sichert das Bedienelement vorzugsweise gegen Verschieben.

Bei Ausgestaltung als Kontrollelement kann der zweite Zustand irreversibel eingenommen werden. Das Kontrollelement behält den zweiten Zustand insbesondere auch dann bei, wenn das Bedienelement in die zweite Richtung zurückbewegt wird, bzw. wenn das Verschlusselement in die Verschlussposition zurückbewegt wird.

Ein solches Kontrollelement ermöglicht einem Benutzer, zu erkennen, ob der Getränkebehälter noch ungeöffnet ist, oder ob das Verschlusssystem bereits zum Öffnen und Wiederverschließen des Behälters benutzt wurde.

In einer Ausführungsform weist das Kontrollelement mindestens einen von außen (d. h. für den Benutzer) sichtbar angebrachten Kontrollsteg auf, wobei der Kontrollsteg derart angeordnet und beschaffen ist, dass er gebrochen wird, wenn das Bedienelement in die erste Richtung bewegt wird, bzw. wenn das Verschlusselement aus der Verschlussposition bewegt wird. Dabei können der oder die Kontrollstege jeweils eine Sollbruchstelle aufweisen.

In einer weiteren Ausführungsform ist das Kontrollelement derart angeordnet und beschaffen, dass durch die Bewegung des Bedienelements in der ersten Richtung eine Ausweichbewegung des Kontrollelements bewirkt wird, durch welche ein Brechen des mindestens einen Kontrollstegs erfolgt.

In einer weiteren Ausführungsform ist das Kontrollelement am Bedienelement mittels einem oder mehreren Querstegen (z.B. mittels mindestens zwei Querstegen) angebracht. Diese gewährleisten vorzugsweise eine Beweglichkeit des Kontrollelements um eine zur ersten Achse orthogonale Kippachse. Dabei verläuft der mindestens eine Kontrollsteg vorzugsweise entlang der ersten Achse und kann insbesondere sowohl am Kontrollelement als auch am Bedienelement befestigt sein. Weiterhin ist das Kontrollelement derart am Bedienelement angeordnet, dass es mit dem Deckel zusammenstößt, wenn das Bedienelement in der ersten Richtung bewegt wird, wobei die Ausweichbewegung ganz oder teilweise durch das Zusammenstoßen bewirkt wird, und wobei die Ausweichbewegung ein Kippen des Kontrollelements um die Kippachse beinhaltet.

Entsprechend brechen in dieser speziellen Ausführungsform die Kontrollstege durch die Kippbewegung um eine zur Ausrichtung der Kontrollstege orthogonale Achse.

Statt über den einen oder die mehreren Querstege kann das Sicherungs- und/oder Kontrollelement mit dem Bedienelement auch über ein Scharnier verbunden sein. Das Scharnier kann durch eine Einkerbung im Bedienelement als bereitgestellt sein. Das Scharnier definiert vorzugsweise eine Kippachse, die orthogonal zur ersten Achse ist.

Das Sicherungs- oder Kontrollelement kann ein oder mehrere Kontrollstege aufweisen, die das Sicherungs- oder Kontrollelement des Bedienelements mit dem Griff verbinden und dazu vorgesehen sind, bei einem Anheben des Griffs zu brechen, und so das Anheben des Griffs irreversibel sichtbar zu machen.

In einer weiteren Ausführungsform weist das Kontrollelement an seiner Unterseite eine Erhebung auf, die derart angeordnet ist, dass sie bei der Bewegung des Bedienelements in der ersten Richtung mit dem Deckel zusammenstößt. Die Erhebung kann als Haken ausgebildet sein.

Insbesondere wird dabei die Ausweichbewegung zumindest teilweise durch dieses Zusammenstoßen bewirkt. Die Erhebung kann beispielsweise am Rande der Trinköffnung oder am Ende eines Führungsschlitzes der Trinköffnung am Deckel anliegen. Außerdem kann das Verschlusselement eine Vertiefung aufweisen, wobei die Erhebung in diese Vertiefung hineinragt.

In einer weiteren Ausführungsform ist das Bedienelement mit dem Kontrollelement einstückig ausgeführt. Das heißt insbesondere, dass das Kontrollelement als ein integraler Bestandteil des Bedienelements ausgestaltet ist und aus demselben Material besteht. Beispielsweise können das Bedienelement und das Kontrollelement aus Aluminium bestehen.

In einer weiteren Ausführungsform ist das Kontrollelement am Verschlusselement vorgesehen. Im ersten Zustand greift es in eine Öffnung des Deckels ein und ist dann durch eine Sichtöffnung des Bedienelements von außen sichtbar. Insbesondere kann das Kontrollelement derart beschaffen und - relativ zur Öffnung des Deckels - positioniert sein, dass das es bricht, wenn das Bedienelement in die erste Richtung bewegt wird, bzw. wenn das Verschlusselement aus der Verschlussposition bewegt wird.

Gemäß einer anderen Ausführungsform des Verschlusssystems weist die Trinköffnung einen Führungsschlitz auf, der entlang der ersten Achse verläuft, und das Bedienelement und/oder das Verschlusselement weisen ein Führungselement auf, das in den Führungsschlitz eingreift, sodass das Bedienelement ausschließlich entlang der ersten Achse beweglich ist. Dieses Führungselement kann beispielsweise außerdem dazu dienen, das Bedienelement und das Verschlusselement fest miteinander zu verbinden. Der Führungsschlitz und die Trinköffnung können ineinander übergehen und/oder als eine durchgängige gemeinsame Öffnung ausgebildet sein. Der Führungsschlitz ist optional.

Die Trinköffnung ist, abgesehen vom Führungsschlitz, vorzugsweise rund, oval oder halbmondförmig ausgebildet.

Gemäß einer weiteren Ausführungsform des Verschlusssystems weist das Verschlusselement mindestens eine Kerbe auf, die derart angeordnet ist, dass bei einer Bewegung des Verschlusselements aus der Verschlussposition das Öffnen der Trinköffnung zuerst durch die Kerbe erfolgt. Dazu kann die Kerbe beispielsweise benachbart zu einem Randabschnitt der Trinköffnung angeordnet sein, insbesondere einem Randabschnitt der Trinköffnung der bei Bewegung des Verschlusselements aus der Verschlussposition in die Offenposition zuerst freigegeben wird. Die Kerbe kann derart am Verschlusselement angeordnet sein, dass sie auf der ersten Achse positioniert ist, wenn sich das Verschlusselement in der Verschlussposition befindet.

Gemäß einer weiteren Ausführungsform des Verschlusssystems weist der Deckel auf der ersten Achse eine Kerbe oder eine Öffnung auf, und das Verschlusselement ist dazu ausgestaltet, in der Verschlussposition außer der Trinköffnung auch die Kerbe bzw. Öffnung abzudecken. Dabei ist die Kerbe an der Trinköffnung, bzw. die Öffnung neben der Trinköffnung jeweils derart angeordnet, dass bei einer Bewegung des Verschlusselements aus der Verschlussposition die Kerbe bzw. Öffnung jeweils vor der Trinköffnung geöffnet wird. Dazu kann die Kerbe oder Öffnung beispielsweise benachbart zu einem Randabschnitt der Trinköffnung angeordnet sein, insbesondere einem Randabschnitt der Trinköffnung der bei Bewegung des Verschlusselements aus der Verschlussposition in die Offenposition zuerst freigegeben wird.

Erfindungsgemäß weist der Deckel mindestens eine Vertiefung auf, die relativ zu der Verschlussposition des Verschlusselements derart angeordnet ist, dass durch die Bewegung des Verschlusselements aus der Verschlussposition, d. h**.** insbesondere eine Bewegung in die erste Richtung, die mindestens eine Vertiefung ganz oder teilweise durch das Verschlusselement abgedeckt wird. Die mindestens eine Vertiefung kann dabei - entweder in die Oberseite oder die Unterseite des Deckels - geprägt oder gestanzt sein.

Erfindungsgemäß ist besagte mindestens eine Vertiefung derart angeordnet, und das Verschlusselement ist derart dimensioniert ist, dass bei der Bewegung des Verschlusselements aus der Verschlussposition heraus die mindestens eine Vertiefung vor dem Öffnen der Trinköffnung mindestens teilweise durch das Verschlusselement bedeckt wird, und dadurch ein Gasaustausch - d. h. zwischen Unter- und Oberseite des Deckels bzw. Doseninnenraum und Umgebung - ermöglicht wird, wenn die mindestens eine Vertiefung teilweise durch das Verschlusselement abgedeckt ist, insbesondere wenn zugleich die Trinköffnung (inklusive Führungsschlitz, falls vorhanden) mindestens teilweise durch das Verschlusselement bedeckt ist. Der Gasaustausch dient insbesondere zum Ausgleich eines Überdrucks und/oder Unterdrucks in dem Getränkebehälter.

In einer Ausführungsform ist die mindestens eine Vertiefung in der Unterseite des Deckels angebracht, und der Gasaustausch erfolgt durch die mindestens eine Vertiefung hindurch. Die Vertiefungen können insbesondere derart hergestellt (z. B. geprägt oder gestanzt) werden, dass jeder Vertiefung eine Erhebung auf der Deckeloberseite entspricht.

In einer anderen Ausführungsform ist die mindestens eine Vertiefung so in der Oberseite des Deckels angebracht, dass auf der Unterseite des Deckels eine der Vertiefung entsprechende Erhebung besteht, wobei das Verschlusselement beim Abdecken der mindestens einen Vertiefung durch die Erhebung von der Unterseite des Deckels distanziert wird, und der Gasaustausch an der mindestens einen Erhebung vorbei erfolgt, beispielsweise in einem Zwischenraum zwischen zwei Erhebungen.

Gemäß einer weiteren Ausführungsform erfolgt eine feste Verbindung des Verschlusselements und des Bedienelements entweder durch eine Schweißverbindung, eine Klebverbindung, eine Nietverbindung oder eine Rastverbindung. Vorzugsweise ist nur eine einzige Schweißung (insbesondere eine einzige Ultraschall- oder Reibschweißung) zwischen dem Verschlusselement und dem Bedienelement vorgesehen oder nur ein einziger Niet. Insbesondere ist vorzugsweise nur eine einzige Schweißung (insbesondere eine einzige Ultraschallschweißung) im Bereich der Verbindung zwischen dem Befestigungsbolzen des Verschlusselements und der Aussparung des Bedienelements vorgesehen.

Eine solche feste Verbindung ist in ihrer Länge vorzugsweise nicht variabel und/oder drehfest. In anderen Worten ist der Abstand zwischen Bedienelement und Verschlusselement im Bereich der Verbindung vorzugsweise fest und/oder nicht variabel und/oder die beiden Elemente können nicht zueinander rotiert werden.

In einer Ausführungsform des Verschlusssystems weisen das Verschlusselement einen Befestigungsbolzen, und das Bedienelement eine Aussparung auf, wobei der Befestigungsbolzen zur festen Verbindung des Verschlusselements und des Bedienelements in die Aussparung eingefügt ist. Insbesondere kann der Befestigungsbolzen Widerhaken zum Einrasten am Bedienelement aufweisen, und/oder in einen Führungsschlitz der Trinköffnung eingreifen, der entlang der ersten Achse verläuft.

Gemäß einer weiteren Ausführungsform des Verschlusssystems weist das Bedienelement einen am Dosendeckel anliegenden Griff auf, wobei der Griff an der Unterseite vorzugsweise gefast ausgeführt ist, und durch eine Schwenkbewegung um eine zu der ersten Achse orthogonalen Schwenkachse um mindestens 45°, insbesondere mindestens 90°, aufstellbar ist. Insbesondere kann dabei
- die Schwenkbewegung zu der zweiten Richtung hin erfolgen, das heißt entgegen der Öffnungsrichtung,
- das Bedienelement mit dem Griff einstückig ausgeführt sein, wobei das Bedienelement eine als Scharnier wirkende Einkerbung in der Oberseite aufweist, die entlang der Schwenkachse verläuft, oder
- der Griff halbringförmig ausgestaltet sein, wobei der Griff beispielsweise um das Kontrollelement herum angeordnet sein kann.

Gemäß einer weiteren Ausführungsform des Verschlusssystems bestehen sowohl der Deckel als auch das Bedienelement aus Aluminium, weiterhin kann auch das Verschlusselement aus Aluminium bestehen.

Gemäß einer weiteren Ausführungsform des Verschlusssystems ist das Verschlusselement bezüglich seiner äußeren Form an eine Form des Deckels angepasst. Insbesondere kann das Verschlusselement oval oder elliptisch sein und entlang einer zur ersten Achse orthogonalen zweiten Achse eine größere Länge aufweisen als entlang der ersten Achse.

Ein zweiter Aspekt der Erfindung betrifft einen Getränkebehälter mit einem Verschlusssystem gemäß dem ersten Aspekt der Erfindung. Insbesondere ist der Getränkebehälter eine Getränkedose, aufweisend einen im wesentlichen zylindrischen Körper zur Aufnahme von Flüssigkeiten, insbesondere kohlensäurehaltigen Getränken. Die Dose kann dabei insbesondere aus Weißblech oder Aluminium gefertigt sein. Der Deckel des Verschlusssystems kann durch eine Falzverbindung an der Dose befestigt sein.

Insbesondere kann das Verschlusssystem bei aus dem Stand der Technik bekannten Getränkedosen den Deckel mit "Stay-On-Tab" ersetzen.

Das erfindungsgemäße Verschlusssystem und die erfindungsgemäße Getränkedose werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine Getränkedose mit einer beispielhaften Ausführungsform des erfindungsgemäßen Verschlusssystems;
- Fig. 2: eine erste Ausführungsform des erfindungsgemäßen Verschlusssystems;
- Fig. 3: die Hauptkomponenten der ersten Ausführungsform des Verschlusssystems in einer Explosionsdarstellung;
- Fig. 4a-d: eine erste beispielhafte Ausführungsformen eines Verschlusselements als Teil der ersten Ausführungsform des Verschlusssystems;
- Fig. 5a-c: eine erste beispielhafte Ausführungsform eines Bedienelements als Teil der ersten Ausführungsform des Verschlusssystems;
- Fig. 6a-d: die erste Ausführungsform des Verschlusssystems in einer Draufsicht und in drei Schnittdarstellungen;
- Fig. 7a-b: eine erste beispielhafte Ausführungsform eines Dosendeckels als Teil eines erfindungsgemäßen Verschlusssystems;
- Fig. 8a-b: eine zweite und eine dritte beispielhafte Ausführungsform des Dosendeckels;
- Fig. 9a-b: eine vierte und eine fünfte beispielhafte Ausführungsform des Dosendeckels;
- Fig. 10a-b: Verschlusselement und Deckel nach einem Öffnen der Trinköffnung;
- Fig. 11a-b: Verschlusselement und Deckel in der Verschlussposition;
- Fig. 12a-b: eine zweite beispielhafte Ausführungsform eines Bedienelements als Teil eines erfindungsgemäßen Verschlusssystems;
- Fig. 13a-d: eine weitere Ausführungsform des erfindungsgemäßen Verschlusssystems;
- Fig. 14a-c: eine zweite beispielhafte Ausführungsformen eines Verschlusselements;
- Fig. 15a-c: eine weitere beispielhafte Ausführungsform des Verschlusssystems mit Vertiefungen im Dosendeckel als Lüftungskanäle;
- Fig. 16a-c: verschiedene beispielhafte Ausgestaltungen der Vertiefungen; und
- Fig. 17a-c: eine Schnittansicht des Verschlusssystems mit Vertiefungen zur Illustration der Funktion als Lüftungskanäle;
- Fig. 18: eine weitere beispielhafte Gestaltung eines Bedienelements;
- Fig. 19: einen Deckel mit optionalen Entlastungskerben;
- Fig. 20: einen weitere Gestaltung eines Deckels zur Verwendung mit dem Verschlusssystem;
- Fig. 21: eine mögliche Gestaltung eines Verschlusselements zur Verwendung mit dem Deckel von Fig. 20;
- Fig. 22: einen weitere Gestaltung eines Deckels zur Verwendung mit dem Verschlusssystem.

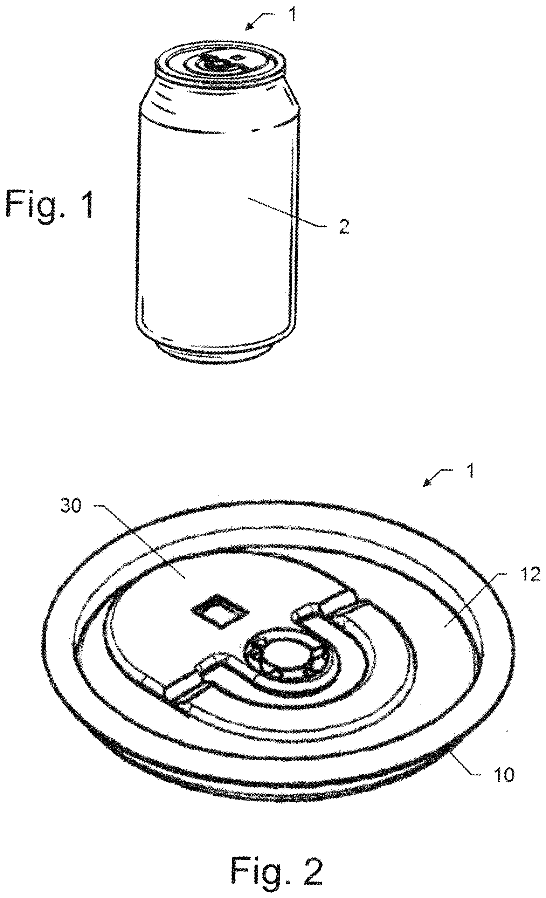

In Figur 1 wird eine Getränkedose 2 als eine beispielhafte Ausführungsform eines Getränkebehälters mit einem erfindungsgemäßen Verschlusssystem 1 dargestellt.

Die beispielhaft gezeigte Getränkedose 2 kann für alle Arten von Getränken verwendet werden, insbesondere für kohlensäurehaltige Getränke wie Bier, Limonaden und Energy-Drinks. Sie weist eine Innendruckfestigkeit von mindestens 6,2 bar auf. Sie weist einen einteiligen, im wesentlichen zylindrischen Behälter aus Aluminium oder Weißblech auf, sowie - als Teil des Verschlusssystems 1 - einen aufgefalzten Deckel, beispielsweise aus Aluminium. Zum Auffalzen kann beispielsweise ein gebördelter Rand der Dose einmal, und der des Deckels zweimal umgelegt werden, so dass die entstehende Falzverbindung aus insgesamt fünf sich formschlüssig umfassenden Metallschichten besteht. Das erfindungsgemäße Verschlusssystem 1 kann außer für Getränkedosen auch für andere Verpackungsarten verwendet werden, so beispielsweise für Getränkekartons oder Flaschen. Am Deckel sind die weiteren Komponenten des Verschlusssystems fixiert.

Figur 2 zeigt eine erste beispielhafte Ausführungsform des Verschlusssystems 1 vor dem Anbringen an der Getränkedose 2 aus Figur 1. Dieses weist zum einen den Deckel 10 selbst auf, dessen Oberseite 12 hier sichtbar ist. Zum anderen ist ein Bedienelement 30 dargestellt, das auf der Oberseite 12 des Deckels vorgesehen ist und ein manuelles Öffnen der Dose durch einen Benutzer ermöglicht.

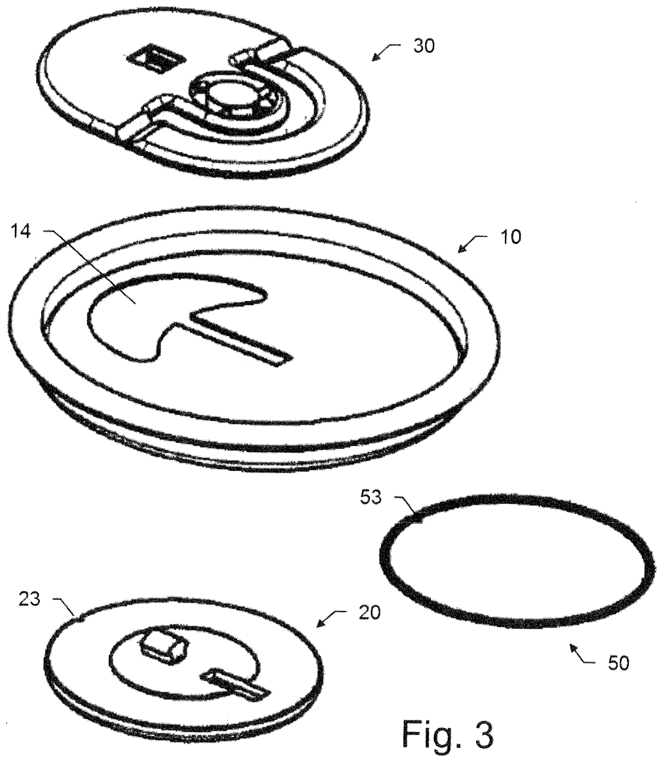

Figur 3 zeigt die Hauptkomponenten der ersten Ausführungsform des Verschlusssystems 1 in einer Explosionsdarstellung. Diese Hauptkomponenten sind der Deckel 10 mit einer Trinköffnung 14, das Bedienelement 30 und ein Verschlusselement 20 zum Abdecken der Trinköffnung 14 von der Unterseite des Deckels aus.

Das beschriebene Verschlusssystem 1 kann einerseits das Verschlusselement 20 und das Bedienelement 30 (und ggf. den Dichtungsring 50) umfassen, die um einen geeigneten Deckel 10 herum aneinander befestigt werden, bevor dieser Deckel dann mit einem zylindrischen Körper zu einer Dose zusammengefügt wird. Andererseits kann das beschriebene Verschlusssystem 1 auch den Deckel 10 selbst umfassen.

Zusätzlich dargestellt ist ein optionaler Dichtungsring 50, der beispielsweise aus Silikon oder Gummi bestehen kann und am Verschlusselement 20 angebracht werden kann. Wenn das Verschlusselement, wie hier dargestellt, eine Kerbe 23 aufweist, kann der Dichtungsring vorzugsweise so geformt sein, dass er eine der Form der Kerbe 23 entsprechende Einbuchtung 53 aufweist. Da der Dichtungsring 50 mit dem Getränk in Berührung kommen kann, ist er vorzugsweise lebensmittelecht und weichmacherfrei ausgestaltet. Optional kann er eine hydrophobe Oberfläche aufweisen.

Der Deckel 10, das Verschlusselement 20 und das Bedienelement 30 können aus demselben Material hergestellt sein, beispielsweise aus Aluminium. Die Herstellung kann mittels bekannter Verfahren erfolgen, beispielsweise durch Gießen oder Stanzen. Insbesondere das Verschlusselement 20 und das Bedienelement 30 können aber auch aus nichtmetallischen Werkstoffen bestehen, beispielsweise Kunststoffen. Als Werkstoff kann insbesondere Polykarbonat verwendet werden; die Komponenten können dann beispielsweise im Spritzgussverfahren hergestellt werden. Optional können das Verschlusselement 20 und das Bedienelement 30 durchsichtig ausgeführt werden.

Das Verschlusselement 20 und das Bedienelement 30 sind derart gestaltet, dass sie nach dem Zusammensetzen durch die Trinköffnung 14 fest miteinander verbindbar sind, beispielsweise mittels Schweißen, Kleben, Widerhaken oder anderen mechanischen Verfahren.

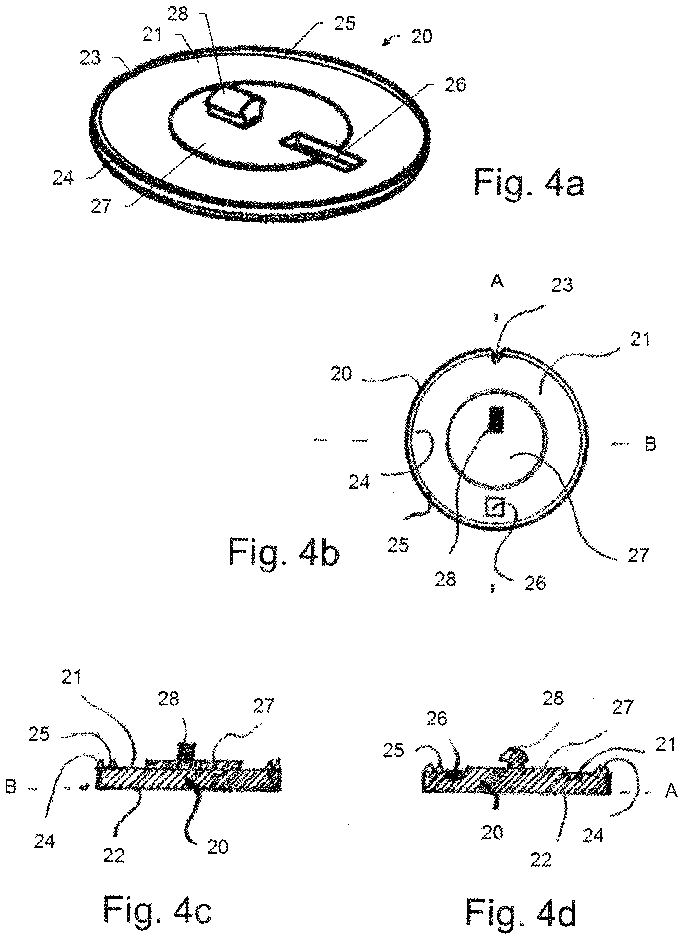

Die Figuren 4a bis 4d zeigen eine erste Ausführungsform des Verschlusselements 20. Figur 4a ist eine perspektivische Ansicht des Verschlusselements 20, und Figur 4b zeigt eine Draufsicht desselben Verschlusselements 20. Auf der Oberseite 21 sind eine Vertiefung 26 und ein Befestigungsbolzen 28 zur Verbindung mit dem Bedienelement 30 (hier nicht dargestellt) vorgesehen. Eine außenliegende Dichtung 24 und eine innenliegende Dichtung 25 sind konzentrisch angeordnet und dienen zur Abdichtung gegenüber der Deckelunterseite (hier nicht dargestellt). Eine konstante Anpressung der Dichtungen 24 und 25 an die Deckelunterseite gewährleistet dabei eine hermetische Abdichtung. Eine optionale zentrale Erhebung 27 gewährleistet - insbesondere wenn das Bedienelement gewölbt ausgestaltet ist - einen gleichen Abstand zwischen dem Deckel einerseits und der Oberseite des Verschlusselements 20 und der Unterseite des Bedienelements andererseits. In der gezeigten Ausführungsform weist das Verschlusselement 20 eine Kerbe 23 auf, die Dichtungen 24 und 25 sind entsprechend ebenfalls gekerbt. Kerbe 23, Befestigungsbolzen 28 und Vertiefung 26 sind entlang einer ersten Achse A angeordnet. Im rechten Winkel dazu verläuft eine zweite Achse B. Figur 4c zeigt eine Schnittdarstellung des Verschlusselements 20 entlang der Achse B, und Figur 4c zeigt eine Schnittdarstellung des entlang der Achse A.

Dargestellt ist auch die dem Doseninnenraum zugewandte Unterseite 22 des Verschlusselements 20. Optional kann ein Dichtungsring aus Silikon oder Gummi (vgl. Figur 3) an bzw. zwischen den Dichtungen 24 und 25 vorgesehen sein.

Das Verschlusselement 20 kann wie dargestellt rund sein, aber auch andere Formen aufweisen (z. B. halbkreisförmig oder polygonal geformt sein). Die Form kann beispielsweise zumindest teilweise der Form der abzudeckenden Trinköffnung angepasst sein. Insbesondere kann das Verschlusselement 20 oval oder elliptisch sein. Um eine vollständige Öffnungsbewegung des Verschlusselements 20 in Richtung der ersten Achse A zu gewährleisten, ist ein ovales oder elliptisches Verschlusselement vorzugsweise entlang der zweiten Achse B breiter als entlang der ersten Achse A.

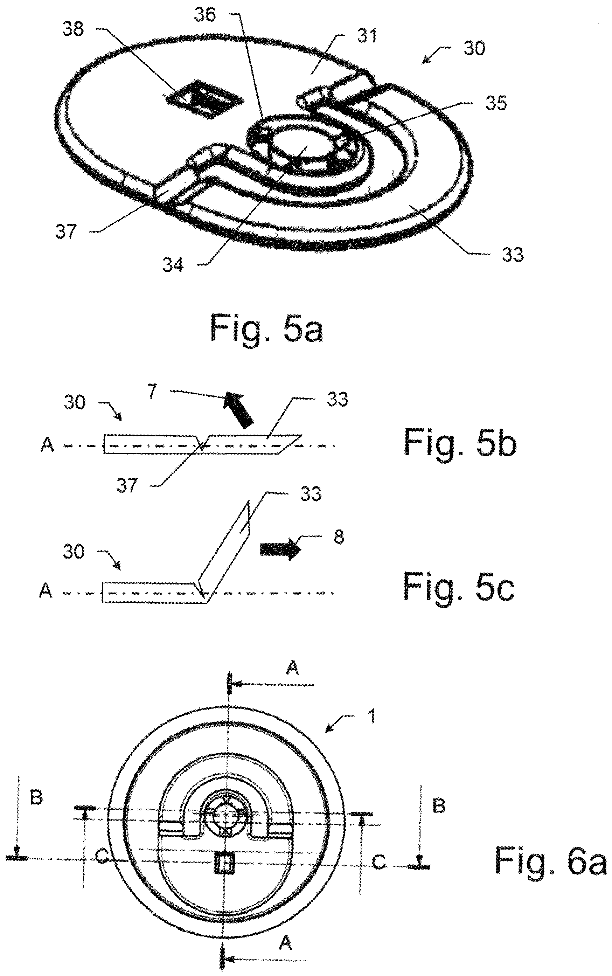

Die Figuren 5a bis 5b zeigen eine erste Ausführungsform des Bedienelements 30. Figur 5a ist eine perspektivische Ansicht der Oberseite 31 des Bedienelements 30. Eine Aussparung 38 dient gemeinsam mit dem Befestigungsbolzen 28 des Verschlusselementes (hier nicht dargestellt) zur Verbindung der beiden Elemente. Die Aussparung 38 kann optional Wiederhaken aufweisen, in die der Befestigungsbolzen 28 einrasten kann. Alternativ oder zusätzlich kann der in die Aussparung 38 eingeführte Befestigungsbolzen 28 durch Verschweißen oder Verkleben fixiert werden.

Das Bedienelement 30 weist ein Sicherungs- oder Kontrollelement 34 auf. Bei einer Ausgestaltung als Kontrollelement 34 kann dieses als eine Art Gütesiegel die Integrität des Doseninhalts anzeigen, solange das Verschlusssystem nicht geöffnet wurde. Mit dem Öffnen wird ein solches Kontrollelement 34 irreversibel und optisch erkennbar verändert. Insbesondere erlaubt dies einem Benutzer, auf einfache Weise zu erkennen, ob sich die Dose noch im Originalzustand befindet, oder ob sie bereits geöffnet war und wieder verschlossen wurde.

In der gezeigten Ausführungsform ist das Sicherungs- oder Kontrollelement 34, welches rund ausgestaltet sein kann, mit dem Hauptteil des Bedienelements 30 über zwei Querstege 35 verbunden. Es weist zwei Kontrollstege 36 auf die orthogonal zu den Drehstegen 35 angeordnet sind, und die dazu ausgestaltet sind, bei einer Öffnung des Verschlusssystems zu brechen.

Die Drehstege 35 sind insofern optional. Alternativ könnte das Sicherungs- oder Kontrollelement 34 auch über ein Scharnier (nicht gezeigt) mit dem übrigen Bedienelement 30 verbunden sein.

Da das Element 34 auch lediglich als Sicherungselement fungieren kann, sind auch die Kontrollstege 36 optional.

Dargestellt ist außerdem ein Griff 33, der als eine Lasche über eine als Scharnier wirkende Einkerbung 37 mit dem Rest des Bedienelements 30 verbunden ist.

Die Figuren 5b und 5c zeigen einen Schnitt durch das Bedienelement 30 und illustrieren die Verwendung des Griffs zum Öffnen des Verschlusssystems. Der Griff 33 ist vorzugsweise gefast, um einem Benutzer das Greifen und Hochziehen des am Dosendeckel anliegenden Griffs zu erleichtern. Um das Scharnier 37 herum kann eine Schwenkbewegung 7 des Griffs 33 erfolgen, vorzugsweise um bis zu 135°. Mit dem so angehobenen Griff 33 kann das Bedienelement 30 durch ein Ziehen 8 am Griff entlang der Achse A einfach aus seiner ursprünglichen Verschlussposition herausbewegt werden, um die Dose zu öffnen.

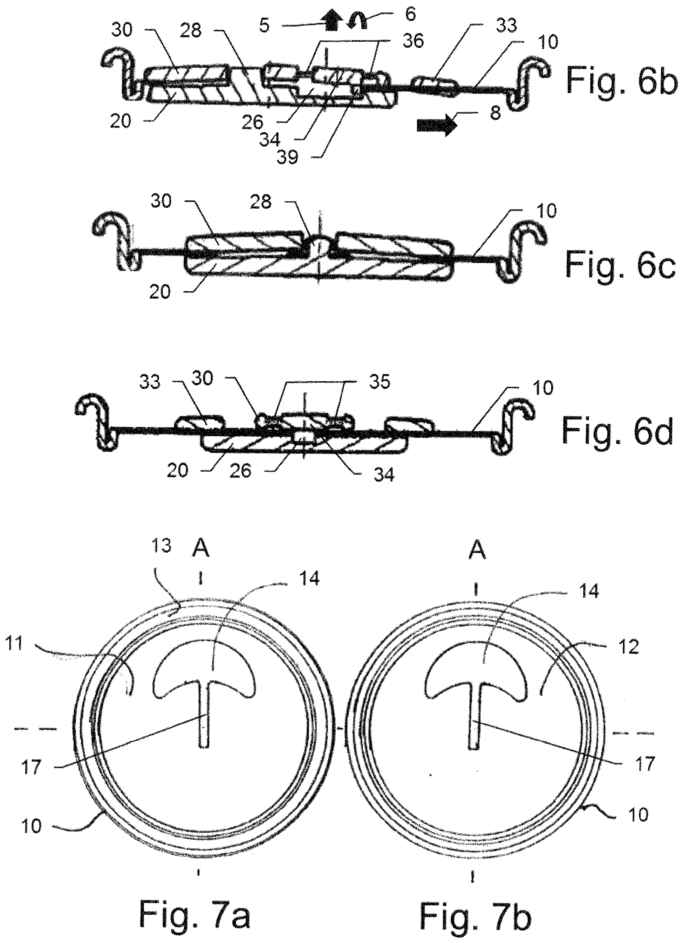

Figur 6a zeigt die erste Ausführungsform des Verschlusssystems 1 in einer Draufsicht. Dargestellt sind drei Achsen A, B und C, wobei die erste Achse A entlang der Bewegungsrichtung des Bedienelements verläuft, und die Achsen B und C orthogonal zu dieser. Dabei schneidet die Achse B die Achse A auf Höhe des Befestigungsbolzens 28 des Verschlusselements und der Aussparung 38 des Bedienelements, und Achse C auf Höhe des Kontrollelements 34 (vgl. Figuren 4a und 5a). Die Figuren 6b, 6c und 6d zeigen jeweils eine Schnittdarstellung entlang einer dieser Achsen. Figur 6b zeigt dabei einen Schnitt durch das Verschlusssystem 1 entlang der ersten Achse A, Figur 6c zeigt einen Schnitt entlang der Achse B, und Figur 6d zeigt einen Schnitt entlang der Achse C.

Wie in den Figuren 6b-d erkennbar, ist das Bedienelement 30 oberhalb und das Verschlusselement 20 unterhalb des Deckels 10 angebracht. Der Befestigungsbolzen 28 greift durch die Trinköffnung des Deckels hindurch in die Aussparung des Bedienelements 30 ein und sorgt (z. B. durch Verhaken, Verschweißen oder Verkleben) für eine feste, verdrehungsfreie Verbindung von Bedien- und Verschlusselement. Alternativ können Bedien- und Verschlusselement auch genietet sein. Das Bedienelement 30 kann gewölbt ausgestaltet sein.

Das Bedienelement 30 wirkt vorzugsweise als Tellerfeder, die sich in einem Außenbereich am Deckel 10 abstützt und so einen Mittenbereich des Betätigungselements vom Deckel 10 wegdrückt. Hierdurch wird vorzugsweise das Verschlusselement 20, insbesondere dessen Dichtung 24 und/oder dessen Dichtung 25, an die Unterseite 12 des Deckels 10 gepresst. Der Mittenbereich kann gegenüber dem Außenbereich zurückgesetzt oder konkav gewölbt sein, insbesondere nach oben. Das Betätigungselement kann sich über den Außenbereich an der Oberseite des Deckels 10 abstützten.

Das Kontrollelement 34 liegt oberhalb der Vertiefung 26 des Verschlusselements und ist an den Querstegen 35 mit dem Bedienelement verbunden. Die Kontrollstege 36 verbinden das Kontrollelement 34 mit dem Bedienelement entlang der ersten Achse A. Das Kontrollelement 34 weist an seiner Unterseite eine zapfenförmige Erhebung 39 auf, die am Rande der Trinköffnung oder am Ende eines Führungsschlitzes der Trinköffnung (vgl. Figur 7a) am Dosendeckel 10 anliegt.

Das Kontrollelement 34 und seine Erhebung 39 sind dabei derart positioniert und beschaffen, dass ein zum Öffnen der Dose nötiges Bewegen des Bedienelements entlang der ersten Achse A (Öffnungsbewegung 8) zu einer Kollision des Kontrollelements 34, bzw. der Erhebung 39, mit der Oberseite des Dosendeckels 10 führt, wobei eine Ausweichbewegung des Kontrollelements 34 erfolgt. Als Ausweichbewegung des Kontrollelements 34 kann eine Aufwärtsbewegung 5, eine Drehbewegung 6 um die Achse C oder eine Kombination der beiden Bewegungen 5, 6 erfolgen, z.B. als Folge der Befestigung des Kontrollelements 34 mittels der optionalen Querstege 35. Durch eine solche Ausweichbewegung, die beim Öffnen der Dose vermittels des Verschlusssystems zwangsläufig ausgelöst wird, werden die Kontrollstege 36 gebrochen. Ein Öffnen der Dose ohne Zerstörung der Kontrollstege ist gemäß dieser Ausführungsform des erfindungsgemäßen Verschlusssystems dementsprechend ausgeschlossen.

Die Kontrollstege 36 weisen eine, insbesondere produktionsbedingte, Toleranz auf, sodass eine bestimmte Kraft aufgewendet werden muss, um sie zu brechen und somit die Dose öffnen zu können. Das Kontrollelement ist dann derart positioniert und ausgestaltet, dass die Öffnungsbewegung 8 Ausweichbewegungen 5, 6 erzeugt, die diese Toleranz überschreitet. Vorzugsweise können die Kontrollstege 36 Sollbruchstellen aufweisen. Dazu kann beispielsweise jeder der Kontrollstege 36 eine im wesentlichen dreieckige Form aufweisen, wobei eine Ecke des Dreiecks die Verbindung mit dem Kontrollelement 34 darstellt und (als dünnste Stelle des Kontrollstegs 36) zugleich als Sollbruchstelle dient.

Der Deckel 10 kann optional nach außen (bzw. oben) hin gewölbt ("bombiert") sein. Das Bedienelement 30 und/oder das Verschlusselement 20 weisen in diesem Fall eine entsprechende Wölbung auf. Dies verstärkt vorteilhaft die Abdichtung durch das Verschlusselement 20.

Wie in den Figuren 6a-c erkennbar dargestellt, ist das Verschlusssystem derart dimensioniert, dass eine Stapelbarkeit mehrerer mit dem Verschlusssystem versehener Dosendeckel nicht beeinträchtigt wird. Ebensowenig wird eine Stapelbarkeit mehrerer mit einem solchen Dosendeckel ausgestalteter Getränkedosen beeinträchtigt. Insbesondere sind das Bedienelement 30 und das Verschlusselement 20 jeweils ausreichend flach ausgestaltet, um eine Verarbeitung der Dosendeckel (inklusive Verschlusssystem) in bestehenden Maschinen und Verfahren zu gewährleisten, in welchen die Deckel auf der Dose angebracht werden.

In den Figuren 7a-b, 8a-b und 9a-b sind verschiedene beispielhafte Ausführungsformen des Deckels 10 bzw. der Trinköffnungen 14 dargestellt.

Dabei zeigen die Figuren 7a und 7b eine erste Ausführungsform. Figur 7a zeigt den Dosendeckel 10 von oben.

Dargestellt ist die Oberseite 11 des Deckels mit der Trinköffnung 14. Umlaufend um die Oberseite befindet sich der Falzrand 13 zur Verbindung des Deckels 10 mit der Dose 2 (vgl. Figur 1). Der Falzrand 13 ist gegenüber der Deckeloberseite 11 erhöht (Kerntiefe). Figur 7b zeigt die Unterseite 12 desselben Deckels. Die erste Ausführungsform des Deckels 10 weist eine Trinköffnung 14 mit einem Führungsschlitz 17 auf, der entlang der Achse A verläuft, und die Bewegungsrichtungen zum Öffnen und Wiederverschließen der Dose vorgibt. Insbesondere kann der Befestigungsbolzen des Verschlusselements in den Führungsschlitz 17 eingreifen und beim Öffnen der Dose diesen entlanggeführt werden.

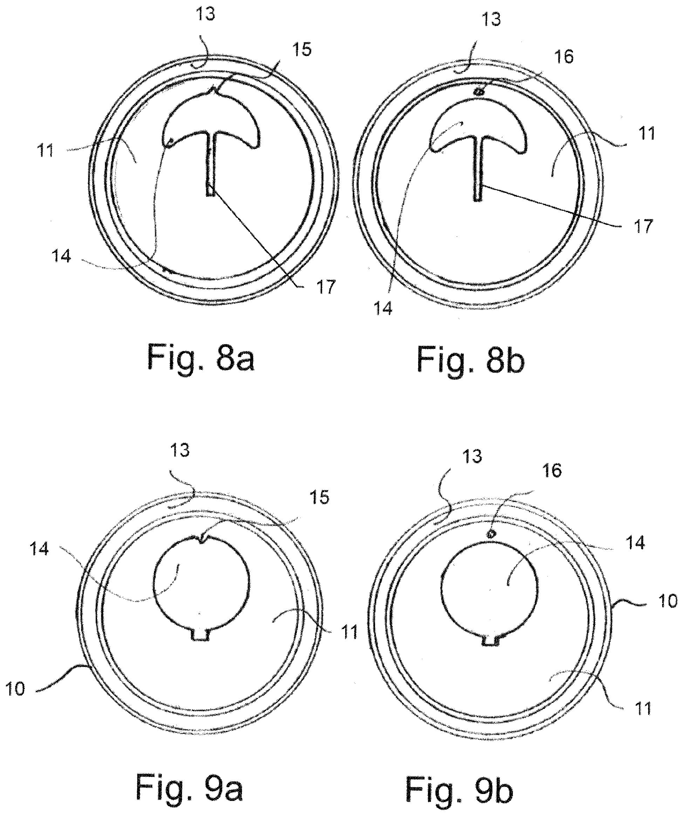

Die Figuren 8a und 8b zeigen als zweite und dritte beispielhafte Ausführungsformen des Deckels 10 zwei Modifikationen der ersten Ausführungsform der Figuren 7a und 7b. In Figur 8a weist die Trinköffnung 14 gegenüber dem Führungsschlitz 17 eine Einkerbung 15 auf. In Figur 8b ist neben der Trinköffnung 14 gegenüber dem Führungsschlitz 17 eine kleine Öffnung 16 vorgesehen. Einkerbung 15 und Öffnung 16 sind dabei jeweils so positioniert, dass sie von dem Verschlusselement 20 (hier nicht dargestellt) verdeckt werden, solange die Dose geschlossen ist. Sie können zusätzlich oder alternativ zur Einkerbung 23 des Verschlusselements vorgesehen sein und erlauben - insbesondere bei kohlensäurehaltigen Getränken - ein sanftes Ausgleichen des Überdrucks in der Dose, wenn diese geöffnet wird. Dazu sind sie vorteilhaft auf der ersten Achse A angeordnet, da dort bei einer Öffnungsbewegung des Verschlusselements entlang dieser Achse die Abdeckung durch das Verschlusselement zuerst entfällt.

Die Figuren 9a und 9b zeigen als vierte und fünfte beispielhafte Ausführungsformen des Deckels 10 zwei Modifikationen der in den Figuren 8a und 8b gezeigten Ausführungsformen mit einer Einkerbung 15 bzw. einer Öffnung 16. In diesen Ausführungsformen ist die Trinköffnung 14 im wesentlichen kreisrund und ohne einen Führungsschlitz ausgestaltet. Es können prinzipiell aber auch diverse andere aus dem Stand der Technik bekannte Formen für die Trinköffnung verwendet werden.

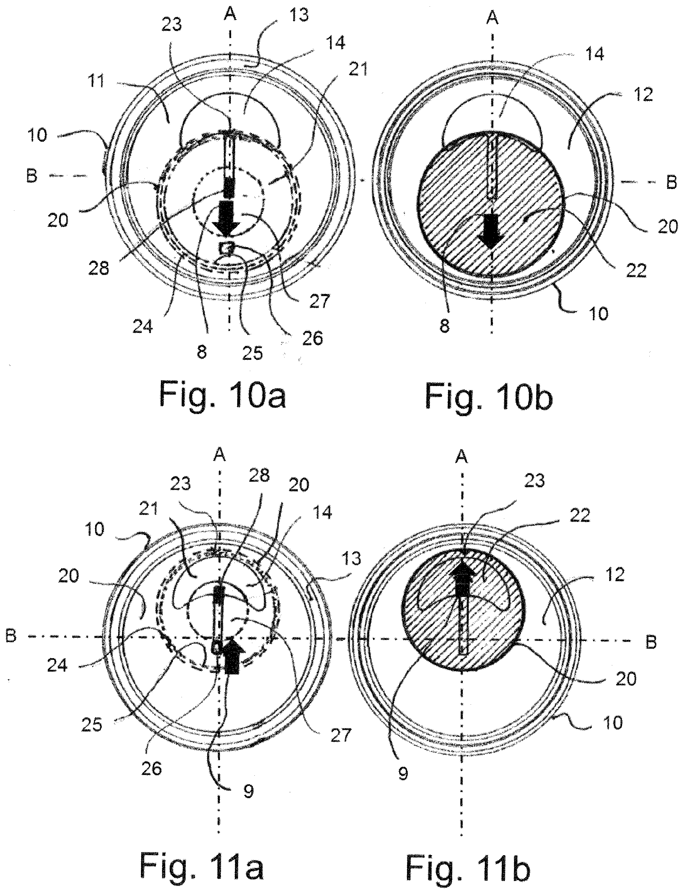

Die Figuren 10a und 10b illustrieren den Vorgang des Öffnens der Dose anhand des Verschlusselements 20. Dabei zeigt Figur 10a den Deckel 10 mit dem darunter befindlichen Verschlusselement 20 von oben, und Figur 10b dieselbe Konfiguration von unten. Das Bedienelement 30 ist hier nur der besseren Übersichtlichkeit halber nicht dargestellt. Nach einer Öffnungsbewegung 8 des Verschlusselements 20 aus seiner Verschlussposition unter der Trinköffnung 14 entlang der ersten Achse A befindet sich das Verschlusselement 20 in einer Trinkposition, in welcher die Trinköffnung 14 freiliegt und welche einem Benutzer das Trinken oder Ausgießen des Doseninhalts ermöglicht.

Figur 10b zeigt von unten die Unterseite 22 des Verschlusselements 20 vor der Unterseite 12 des Dosendeckels 10. Nach der Öffnungsbewegung 8 liegt die Trinköffnung 14 frei. Die Unterseite 22 des Verschlusselements 20 kommt mit dem Doseninhalt in Berührung und ist dementsprechend vorzugsweise unempfindlich und lebensmittelecht ausgestaltet. Sie kann insbesondere glatt und eben ausgeführt sein. In dieser beispielhaften Ausführungsform weist die Unterseite 22 (im Gegensatz zur Oberseite 21) keine durch Erhebungen oder Vertiefungen gekennzeichneten Merkmale auf.

Figur 10a zeigt die Oberseite 11 des Dosendeckels 10 mit Falzrand 13 und Trinköffnung 14. Darunter (gestrichelt dargestellt, da eigentlich vom Dosendeckel verdeckt) befindet sich das Verschlusselement 20, das mit seiner Oberseite 21 am Dosendeckel anliegt und durch eine außenliegende Dichtung 24, eine innenliegende Dichtung 25 sowie eine zentrale Erhebung 27 eine Abdichtung des jeweils vom Verschlusselement 20 abgedeckten Teils der Deckelunterseite bewirkt. Erkennbar ist, dass der Befestigungsbolzen 28 im Führungsschlitz der Trinköffnung entlang der ersten Achse A geführt wird.

Die Figuren 11a und 11b illustrieren (analog zu den Figuren 10a und 10b) den Vorgang des Wiederverschließens der Dose. Dabei zeigt Figur 11a den Deckel 10 mit dem darunter befindlichen Verschlusselement 20 von oben, und Figur 11b dieselbe Konfiguration von unten. Das Bedienelement 30 ist auch hier nur der besseren Übersichtlichkeit halber nicht dargestellt. Das Verschlusselement 20 befindet sich in seiner Verschlussposition unter der Trinköffnung 14 und verhindert so ein Austreten des Doseninhalts. Diese Position nimmt das Verschlusselement 20 ursprünglich ein und nach einer Verschließbewegung 9, mittels welcher die Dose wieder verschlossen werden kann, nachdem sie bereits offen war. Die Verschließbewegung 9 verläuft entlang der ersten Achse A und entgegen der Öffnungsbewegung 8 (vgl. Figur 10a). Wie Figur 11a entnommen werden kann, ist der Befestigungsbolzen 28 in der Verschlussposition des Verschlusselements 20 am Anfang des Führungsschlitzes positioniert.

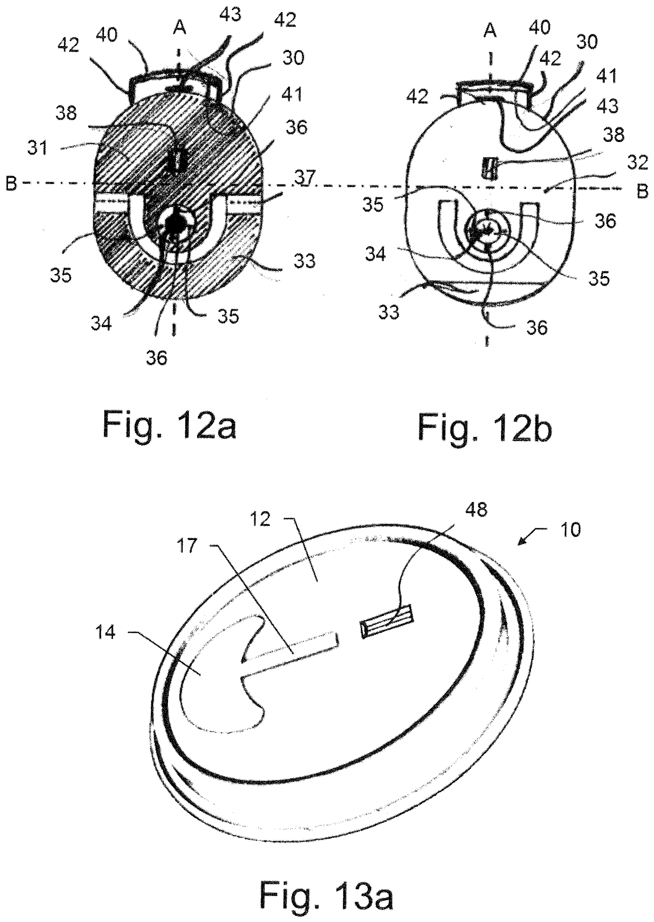

Die Figuren 12a und 12b zeigen eine zweite Ausführungsform des Bedienelements 30 mit einer alternativen Ausführung des Kontrollelementes 40. Dabei zeigt Figur 12a das Bedienelement 30 von oben, und Figur 12b von unten.

Das Kontrollelement 40 weist ein Sperrelement 41 auf, das dazu vorgesehen ist, beim Zusammenbau des Verschlusssystems am Rand des Deckels einzurasten. Das Sperrelement 41 ist dazu am Bedienelement über ein Scharnier 43 befestigt, das dieses Einrasten ermöglicht. Das Kontrollelement 40 weist zwei Kontrollstege 42 am Sperrelement 41 auf. Bei einer Bewegung des Bedienelements 30 vom Rand des Dosendeckels weg brechen diese Kontrollstege 42, wodurch eine Öffnung der Dose auch nach einem Wiederverschließen sichtbar bleibt. In den Figuren 12a und 12b ist das Bedienelement 30 rein beispielhaft mit den zwei verschieden ausgeführten Kontrollelementen 34 und 40 dargestellt. Alternativ kann das Bedienelement 30 natürlich auch mit nur einem der beiden Kontrollelemente oder auch mit einem anders gestaltetem Kontrollelement ausgestattet sein, das denselben Zweck erfüllt, d. h. einem Benutzer anzuzeigen, ob das Verschlusssystem bereits geöffnet wurde.

In den Figuren 13a bis 13d ist eine weitere beispielhafte Ausführungsform eines erfindungsgemäßen Verschlusssystems dargestellt, wobei das Verschlusssystem ein alternatives Kontrollelement aufweist.

Figur 13a zeigt den Deckel 10 dieser Ausführungsform des Verschlusssystems. Dieser ist von unten dargestellt, sodass die Unterseite 12 mit der Trinköffnung 14 und einem Führungsschlitz 17 sichtbar ist. In der Verlängerung des Führungsschlitzes 17 ist eine weitere längliche Öffnung 48 vorgesehen.

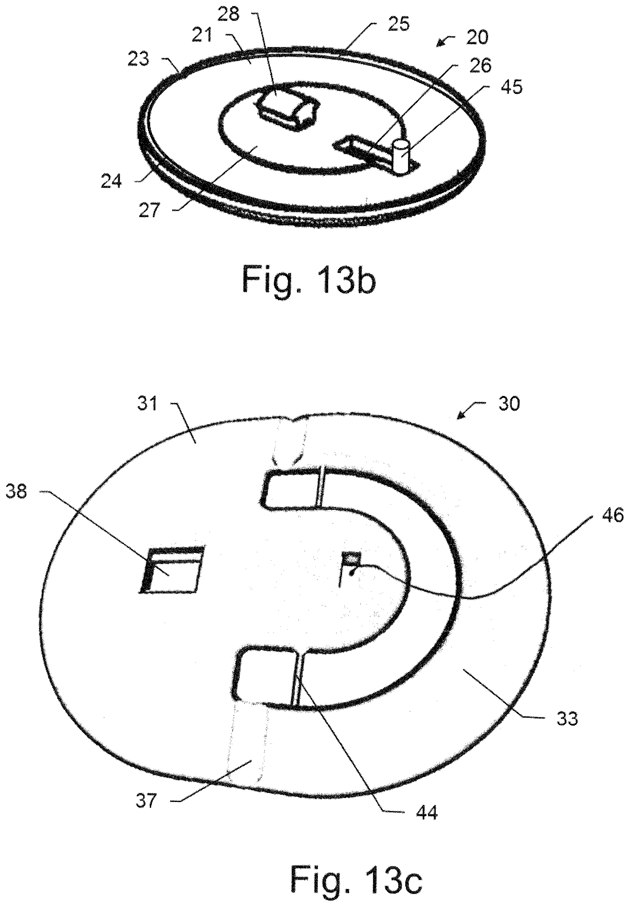

Figur 13b zeigt das Verschlusselement 20 dieser Ausführungsform des Verschlusssystems. Auf der Oberseite 21 sind eine Vertiefung 26 und ein Befestigungsbolzen 28 zur Verbindung mit dem Bedienelement 30 (hier nicht dargestellt) vorgesehen. Eine außenliegende Dichtung 24 und eine innenliegende Dichtung 25 dienen zur Abdichtung gegenüber der Deckelunterseite (hier nicht dargestellt). Im Unterschied zur in Figur 4a dargestellten Ausführungsform weist das hier gezeigte Verschlusselement 20 zusätzlich ein Kontrollelement 45 in Form eines Stabes auf. Dieser Kontrollstab 45 ist am Rande der Vertiefung 26 angebracht. Stab 45 und Vertiefung 26 sind derart dimensioniert, dass der Stab in die Vertiefung hineinpasst. Obwohl der Kontrollstab 45 hier zylindrisch dargestellt ist, kann er auch anders geformt sein. So kann er insbesondere konisch, in Form eines Halbzylinders oder quaderförmig ausgestaltet sein. Der Stab 45 ist auf dem Verschlusselement 20 derart positioniert, dass er in einer Verschlussposition des Verschlusselements 20, d. h. in einer Position, in welcher das Verschlusselement 20 die Trinköffnung 14 abdeckt, in die längliche Öffnung 48 des Deckels 10 (siehe Figur 13a) eingreift.

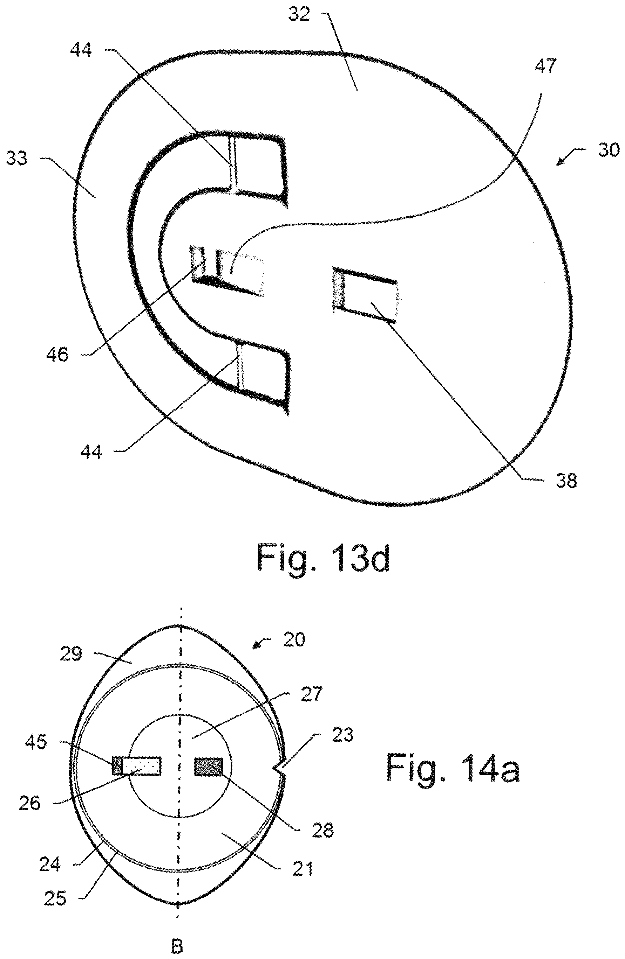

Die Figuren 13c und 13d zeigen das Bedienelement 30 dieser Ausführungsform des Verschlusssystems von oben und von unten. Figur 13c zeigt die Oberseite 31 des Bedienelements 30. Im Unterschied zur in Figur 5a dargestellten Ausführungsform weist das hier gezeigte Bedienelement 30 kein Kontrollelement auf. Stattdessen ist eine Sichtöffnung 46 vorgesehen, die oberhalb des Kontrollstabs 45 des Verschlusselements 20 positioniert ist, wenn Bedienelement 30 und Verschlusselement 20 miteinander verbunden sind - beispielsweise mittels Befestigungsbolzen 28 und Aussparung 38 fest verbunden.

Außerdem weist das Bedienelement 30 Kontrollstege 44 auf, die den Hauptteil des Bedienelements mit dem Griff 33 verbinden und dazu vorgesehen sind, bei einem Anheben des Griffs 33 (vgl. Figuren 5a-c) zu brechen, und so bereits das Anheben des Griffs 33 irreversibel sichtbar zu machen. Es versteht sich, dass diese Ausführungsform des Griffs 33 auch mit den zuvor dargestellten Ausführungsformen des Bedienelements 30 kombinierbar ist.

Figur 13d zeigt die Unterseite 32 des Bedienelements 30. Erkennbar ist eine gefaste Vertiefung 47 an der Sichtöffnung 46, die oberhalb der Vertiefung 26 des Verschlusselements 20 positioniert ist, wenn Bedienelement 30 und Verschlusselement 20 miteinander verbunden sind.

Die in den Figuren 13-d gezeigte Ausführungsform des Verschlusssystems weist ein alternatives Kontrollsystem auf, um eine originalverschlossene Dose von einer wiederverschlossenen deutlich unterscheidbar zu machen. Dabei fungiert der Kontrollstab 45 als Kontrollelement. Im originalverschlossenen Zustand greift der Kontrollstab 45 durch die Deckelöffnung 48 in die Sichtöffnung 46 in Bedienelement 30 ein und ist dort für den Konsumenten sichtbar. Vorzugsweise kann eine Oberseite des Kontrollstabs 45 farbig ausgestaltet sein, um die Sichtbarkeit zu verbessern. Bei einer Öffnungsbewegung stößt der Kontrollstab 45 gegen den Dosendeckel 10 und bricht. Vorzugsweise kann der Kontrollstab 45 eine Sollbruchstelle aufweisen, um nicht unkontrolliert zu brechen und ggf. den Öffnungsvorgang zu blockieren. Der gebrochene Kontrollstab 45 wird durch die gefaste Vertiefung 47 in der Unterseite 32 des Bedienelements 30 und durch die Öffnungsbewegung gekippt und kommt in der Vertiefung 26 auf der Oberseite 22 des Verschlusselements 20 zu liegen. Der Kontrollstab ist daher in der Sichtöffnung nicht mehr zu sehen. Alternativ können die Seiten des Kontrollstabs 45 andersfarbig als die Oberseite ausgestaltet sein, sodass die erfolgte Öffnung durch die Farbe in der Sichtöffnung 46 erkennbar ist.

Insbesondere in dieser Ausführungsform kann das Verschlusselement 20 neben der gezeigten runden auch eine ovale oder elliptische Grundform aufweisen.

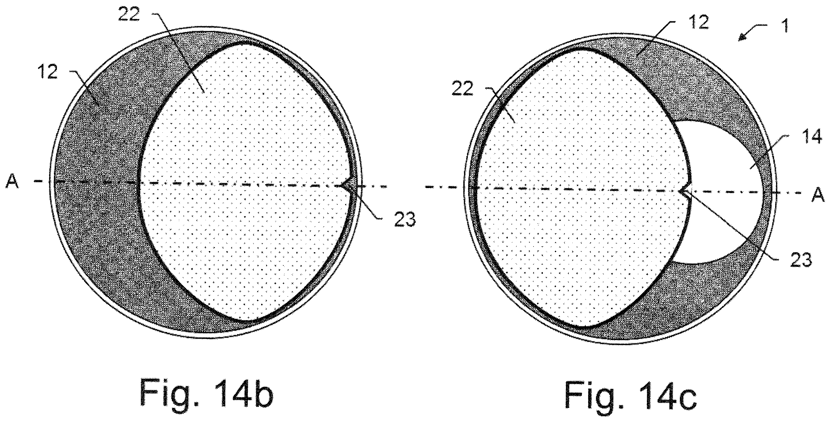

Die Figuren 14a-c zeigen eine zweite beispielhafte Ausführungsform des Verschlusselements 20. In Figur 14a ist das Verschlusselement 20 von oben dargestellt, so dass die Oberseite 21 mit den auf dieser angeordneten (und schon in Bezug auf die Figuren 4a-d bzw. Figur 13b gezeigten) Merkmalen sichtbar ist. Diese Merkmale umfassen die außenliegende Dichtung 24 und die innenliegende Dichtung 25 mit der Kerbe 23, die Vertiefung 26, die zentrale Ergebung 27 und den Befestigungsbolzen 28 auf. Zudem ist hier der Kontrollstab 45 Teil des Verschlusselements 20. Darüber hinaus weist das Verschlusselement 20 in dieser Ausführungsform einen Konturbereich 29 auf, der dem Verschlusselement insgesamt eine ovale Form verleiht. Der Konturbereich 29 ist hinsichtlich Form und Größe dem Dosendeckel angepasst. Dadurch, dass das Verschlusselement entlang der Achse B deutlich länger ist als entlang der zu dieser orthogonalen Öffnungsrichtung, bleibt eine komplette Öffnung des Verschlusssystems gewährleistet. Dies ist in den Figuren 14b und 14c dargestellt. Die Dichtungen 24 und 25 sind jedoch kreisförmig angeordnet und umschließen einen Bereich der ausreichend groß ist, die Trinköffnung im Deckel komplett abzudecken. Optional kann ein Dichtungsring (vgl. Figur 3) an bzw. zwischen den Dichtungen 24 und 25 vorgesehen sein.

Die Figuren 14b und 14c zeigen das Verschlusssystem 1 mit dem Verschlusselement aus Figur 14a von unten. Zu sehen ist jeweils die Unterseite 12 des Dosendeckels und die Unterseite 22 des Verschlusselements. In Figur 14b befindet sich das Verschlusselement in der Verschlussposition - die Trinköffnung ist komplett abgedeckt. In Figur 14c ist die Dose geöffnet. Das Verschlusselement wurde entlang der ersten Achse A aus der Verschlussposition heraus bewegt, sodass die Trinköffnung 14 freiliegt. Dargestellt ist auch jeweils die Kerbe 23, die an der ersten Achse A angeordnet ist, und bei einem Verschieben des Verschlusselements entlang der ersten Achse A die erste Öffnung unterhalb der Trinköffnung 14 darstellt, sodass hier der insbesondere bei kohlensäurehaltigen Getränken vorhandene Überdruck im Inneren der Dose besonders sanft ausgeglichen werden kann. Die dem Dosendeckel angepasste Form des Verschlusselements verbessert einerseits die Stabilität des Verschlusssystems 1 und verhindert andererseits eine übermäßige Öffnungs- bzw. Wiederverschließbewegung des Verschlusssystems.

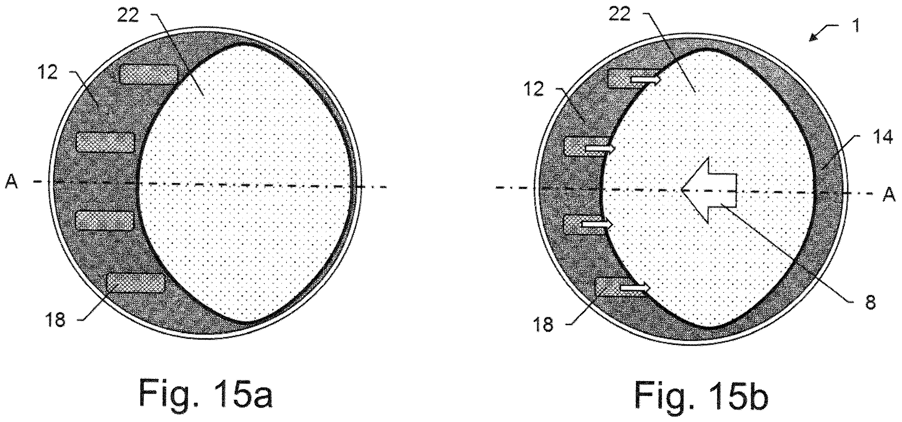

Die Figuren 15a-c zeigen eine weitere beispielhafte Ausführungsform des Verschlusssystems 1. Dargestellt ist das Verschlusssystem jeweils von unten, sodass die Unterseite 12 des Dosendeckels und die Unterseite 22 des Verschlusselements sichtbar sind. Das Verschlusselement ist hier rein beispielhaft das in den Figuren 14a-c gezeigte. Gemäß der Erfindung weist der Dosendeckel eine oder mehrere Vertiefungen 18 auf, die z.B. länglich ausgebildet sein können. Diese können beispielsweise durch Stanzen oder Prägen in die Ober- oder Unterseite des Deckels eingebracht werden. Diese, auch als Nuten oder Rillen ausführbaren, Verformungen dienen einerseits einer erhöhten Stabilität und Festigkeit des Deckels. Andererseits können sie als Lüftungskanäle einem Gasaustausch dienen, sodass diese Ausführungsform keine Kerben am Verschlusselement oder an der Trinköffnung aufweist. Bei Erstöffnung des Behälters kann Luft aus der Dose kontrolliert entweichen, und beim Trinken kann Außenluft in die Dose einfließen. Die Vertiefungen können aber auch mit Kerben kombiniert werden.

In Figur 15a befindet sich das Verschlusselement in der Verschlussposition - die Trinköffnung ist komplett abgedeckt, die länglichen Vertiefungen 18 werden vom Verschlusselement nicht tangiert, sodass weder ein Gasaustausch möglich ist, noch Flüssigkeit austreten kann.

Figur 15b zeigt das Verschlusselement während einer Öffnungsbewegung 8 entlang der ersten Achse **A.** Die Trinköffnung ist noch komplett abgedeckt, das Verschlusselement wurde aber bereits unter die Vertiefungen 18 bewegt. Sobald das Verschlusselement mit seinem Abdichtungsbereich mindestens eine der Vertiefungen 18 teilweise bedeckt, kann über den noch nicht abgedeckten Teil dieser mindestens einen Vertiefung 18 und die noch bedeckte Trinköffnung ein Gasaustausch 7a zwischen dem Doseninnenraum mit der Umgebung stattfinden, wobei die Vertiefung als Lüftungskanal dient. Auf diese Weise kann vorteilhaft der insbesondere bei kohlensäurehaltigen Getränken vorhandene Überdruck im Inneren der Dose besonders sanft und noch vor dem Öffnen der Trinköffnung 14 ausgeglichen werden.

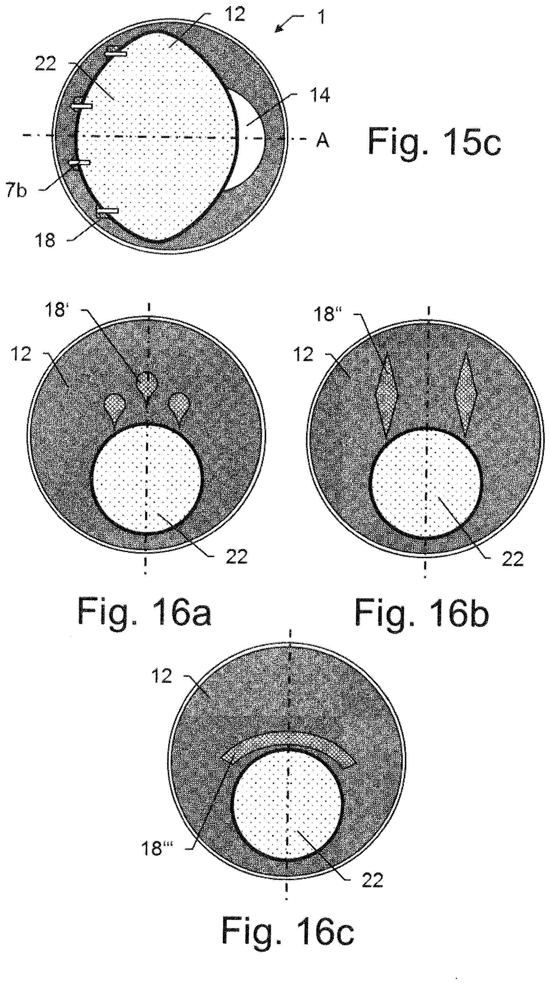

In Figur 15c ist die Dose vollständig geöffnet. Das Verschlusselement wurde entlang der ersten Achse A aus der Verschlussposition heraus bewegt, sodass die Trinköffnung 14 freiliegt. Die Vertiefungen 18 werden dabei vom Verschlusselement teilweise abgedeckt, so dass ein Gasaustausch 7b zwischen der Umgebung und dem Inneren der Dose nicht nur durch die Trinköffnung erfolgen kann sondern auch durch die Vertiefungen 18, die als Lüftungskanal dienen. Auf diese Weise kann vorteilhaft der beim Trinken oder Ausgießen entstehende Unterdruck im Inneren der Dose ausgeglichen werden. Vorteilhaft verbessert dies die Ausgießeigenschaften. Ein Trinken oder Ausgießen des Doseninhalts durch die Trinköffnung kann sowohl gleichmäßiger als auch schneller erfolgen. Da die aus der Dose ausgetretene Flüssigkeit gleichmäßig über die Vertiefungen 18 durch Luft aus der Umgebung ersetzt werden kann, steht zumindest ein größerer Teil der Trinköffnung 14, insbesondere die gesamte Trinköffnung 14, für den Durchfluss der Flüssigkeit zur Verfügung.

Die Vertiefungen 18 sind hinsichtlich ihrer Dimensionierung, Oberfläche, Form, Anzahl und Positionen vorzugsweise darauf ausgelegt, einen kontrollierten optimalen Gasaustausch 7a, 7b zwischen dem Doseninnenraum und der Umgebung zu gewährleisten. Eine Optimierung der Ausgestaltung der Vertiefungen sollte vorzugweise einen kontrollierten, möglichst sanften Austritt 7a von Gas beim Öffnen der Dose berücksichtigen, insbesondere im Fall von kohlensäurehaltigen Getränken, und/oder einen möglichst starken Eintritt 7b von Luft in die Dose, während der Doseninhalt durch die Trinköffnung 14 getrunken oder umgefüllt wird.

Dazu können für den Austritt 7a optimierte Vertiefungen 18 mit für den Eintritt 7b optimierten Vertiefungen 18 kombiniert werden (wobei allerdings auch eine Art von Vertiefungen - für Austritt oder Eintritt - genügen kann). Für den Austritt 7a optimierte Vertiefungen können insbesondere so positioniert sein, dass sie gleich nach Beginn eines Öffnungsvorgangs vom Verschlusselement erreicht werden und als Lüftungskanal fungieren, aber bei voller Öffnung komplett vom Verschlusselement abgedeckt sind. Für den Eintritt 7b optimierte Vertiefungen können hingegen so positioniert sein, dass sie nur bei kompletter Öffnung vom Verschlusselement erreicht werden und als Lüftungskanal fungieren.

Die Figuren 16a-c illustrieren verschiedene Formen und Anordnungen der Vertiefungen 18', 18'', 18‴. Dargestellt ist auch hier die Unterseite 12 des Dosendeckels mit der Unterseite 22 des Verschlusselements. Rein beispielhaft sind hier tropfenförmige Vertiefungen 18', rautenförmige Vertiefungen 18'' sowie eine bogenförmige Vertiefung 18‴ dargestellt. Neben parallel zur Öffnungsrichtung angeordneten Vertiefungen sind auch radiale Anordnungen möglich.

Außer geometrischen Formen können auch Vertiefungen mit komplexeren Mustern verwendet werden, insbesondere Figuren, Logos oder Schriftzüge, die einen Bezug zum Doseninhalt herstellen oder über diesen informieren. Die Muster können beispielsweise ein Markenzeichen des Herstellers, oder Informationen über eine Füllmenge oder ein Verfallsdatum beinhalten. Eine Kombination solcher Muster mit für den Gasaustausch 7a, 7b optimierten Vertiefungsformen ist ebenfalls möglich. Grundsätzlich kann die Form und die Anordnung der Vertiefung bzw. der Vertiefungen jedoch variieren, solange durch diese ein Lüftungskanal bereitgestellt wird, der die Dichtung des Verschlusselements umgeht.

Entweder kann die Deckelunterseite 12 eine oder mehrere Vertiefungen 18, 18', 18", 18‴ aufweisen, sodass die Oberseite 11 entsprechende Erhebungen aufweist, oder die eine oder mehrere Vertiefungen 18, 18', 18'', 18‴ sind in der Deckeloberseite 11 und entsprechend ein oder mehrere erhabene Merkmale an der Unterseite 12 vorhanden. Im letzteren Fall kann das Verschlusselement dazu ausgestaltet sein, durch die eine oder mehreren Erhebungen bei einer Öffnungsbewegung geringfügig (beispielsweise bis zu 1 mm) von der Deckelunterseite abgehoben zu werden, sodass der Gasaustausch 7a, 7b jeweils durch Zwischenräume der Erhebungen erfolgt oder zwischen Dichtung und Deckelunterseite 12.

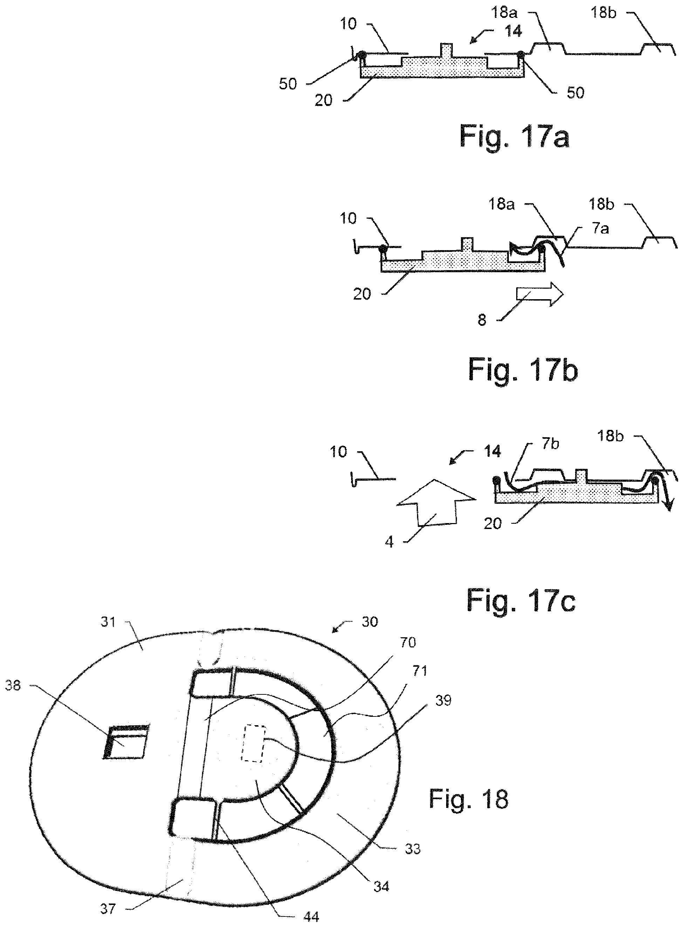

In den Figuren 17a-c ist eine beispielhafte Ausführungsform des Verschlusssystems mit Vertiefungen im Dosendeckel in einer Schnittdarstellung gezeigt. Zu sehen ist jeweils der Deckel 10 mit der Trinköffnung 14 und zwei Vertiefungen 18a und 18b. Die Vertiefungen sind in die Unterseite des Deckels eingebracht, sodass sie auf der Oberseite Erhebungen darstellen. Unterhalb des Deckels ist das Verschlusselement 20 gezeigt, das mit seinem Dichtungsring 50 die Deckelunterseite kontaktiert. Das Verschlusselement ist hier der Übersichtlichkeit halber nicht dargestellt.

In Figur 17a befindet sich das Verschlusselement 20 in seiner Verschlussposition unterhalb der Trinköffnung 14 und deckt diese ab. Die Vertiefungen 18a und 18b werden in dieser Position nicht vom Verschlusselement 20 tangiert.

Figur 17b zeigt eine Situation, in der der Öffnungsvorgang begonnen hat. Das Verschlusselement 20 wird in Öffnungsrichtung 8 bewegt und erreicht eine erste Vertiefung 18a, wodurch ein Lüftungskanal entsteht, durch welchen ein Gasaustritt 7a aus dem Doseninneren in die Umgebung erfolgen kann, sodass ein Überdruck in der Dose abgebaut oder verringert werden kann, bevor das Verschlusselement 20 die Trinköffnung 14 freigibt.

Figur 17c zeigt das Verschlusssystem im geöffneten Zustand. Die Trinköffnung 14 liegt überwiegend frei, das Verschlusselement 20 bedeckt nur einen geringen Teil der Öffnung 14 - dieser Teil kann beispielsweise auch ein Führungsschlitz der Trinköffnung sein (siehe z. B. Figuren 7a,b). Das Verschlusselement deckt eine zweite Vertiefung 18b ab, sodass ein Lüftungskanal entsteht. Wird der flüssige Doseninhalt nun - insbesondere durch Kippen der Dose - getrunken oder ausgeleert, fließt er der Schwerkraft folgend durch die Trinköffnung 14 aus der Dose hinaus (illustriert durch Pfeil 4). Dadurch kann in der Dose ein Unterdruck entstehen, der die Fließgeschwindigkeit nachteilig verringern kann. Durch den Lüftungskanal der zweiten Vertiefung 18b kann jedoch ein Gaseintritt 7b in die Dose erfolgen, wodurch der Unterdruck vorteilhaft ausgeglichen werden kann.

Vorzugsweise ist die erste Vertiefung 18a hinsichtlich ihrer Dimensionierung, Form, Position, Ausrichtung, Oberflächenstruktur für einen optimalen Gasaustritt 7a ausgestaltet. Ebenso ist die Vertiefung 18b hinsichtlich ihrer Dimensionierung, Form, Position, Ausrichtung, Oberflächenstruktur vorzugsweise für einen optimalen Gaseintritt 7b ausgestaltet. Alternativ kann natürlich eine Vertiefung verwendet werden, die Merkmale aufweist, die sowohl einen Gasaustritt 7a als auch einen Gaseintritt 7b wie gewünscht ermöglicht.

Das Verschlusselement 20 kann vorteilhaft zu den Vertiefungen im Deckel korrespondierende Vertiefungen aufweisen, wobei die Vertiefungen je nach Position des Verschlusselements 20 unterschiedlich gestaltete Lüftungskanäle bilden, um den Gasaustausch 7a,b möglichst optimal zu führen. Ebenso ist das Bedienelement vorzugsweise so gestaltet, dass der Gasaustausch 7a,b nicht behindert wird, beziehungsweise so gestaltet, dass der Gasaustausch 7a,b gefördert wird und möglichst kontrolliert erfolgt. So kann auch das Bedienelement Lüftungskanäle aufweisen, bzw. zusammen mit dem Verschlusselement 20 Lüftungskanäle bilden. Beispielsweise kann so ein Gasaustritt 7a in die Umgebung zielgerichtet werden, insbesondere von einem Benutzer der Dose weggeführt, z. B. orthogonal zur Öffnungsrichtung. Das Verschlusselement 20 und das Bedienelement können auch dazu ausgestaltet sein, einen Überdruck des Doseninneren aufzunehmen und geregelt an die Umgebung abzugeben.

Der Öffnungsvorgang kann optional durch einen oder mehrere mechanische Widerstände (hier nicht dargestellt) verzögert werden, wenn sich das Verschlusselement an einer bestimmten Position befindet, um den Gasaustritt 7a optimal zu gestalten. Diese Widerstände können beispielsweise als Erhebungen im Deckel ausgestaltet sein, gegen die das Bedienelement oder das Verschlusselement während des Öffnungsvorgangs stoßen. Der oder die Widerstände können insbesondere auch durch ein Kontrollelement (vgl. Figuren 5a, 12a, 13b) erzeugt werden, mittels derer eine erste Öffnung des Verschlusses für den Benutzer erkennbar wird.

Die Widerstände können für eine geringfügige Verzögerung des Öffnungsvorgangs an einer bestimmten Position führen. Diese kann so gewählt werden, dass eine bestimmte Menge an Gas austreten kann, bevor die Trinköffnung 14 geöffnet wird. Die Widerstände können aber auch für einen den Verschluss öffnenden Benutzer einen merklichen Widerstand erzeugen. In diesem Fall kann der Benutzer ein Entlüften der Dose, insbesondere einen vollständigen Abbau des Überdrucks, abwarten, bis er mit dem Öffnungsvorgang fortfährt.

Optional kann ein Lüftungskanal im Verschlusselement oder im Bedienelement derart gestaltet werden, dass durch den Gasaustritt 7a ein akustisches Signal erzeugt wird, beispielsweise in Form einer Pfeife oder Flöte. Der Benutzer kann beispielsweise anhand der Lautstärke des Signals erkennen, ob noch Überdruck in der Dose herrscht, und davon abhängig den Öffnungsvorgang fortsetzen.

Fig. 18 zeigt eine weitere beispielhafte Ausführungsform eines Bedienelements 30, das mit den vorstehend beschriebenen Verschlusselementen 20 kombiniert werden kann.

Ein Sicherungs- und/oder Kontrollelement 34 ist in diesem Fall über ein Scharnier 70 mit dem übrigen Bedienelement 30 verbunden, insbesondere mit dem Abschnitt des Bedienelements 30, an welchem die Verbindung mit dem Verschlusselement vorgesehen ist (hier der Bereich, in dem die Aussparung 38 zur Aufnahme des Befestigungsbolzen 28 vorgesehen ist; statt der Aussparung 38 können jedoch auch andere Verbindungsarten gewählt werden, wie oben beschrieben).Das Sicherungs- und/oder Kontrollelement 34 ist optional mit dem Griff 33 verbunden, z.B. fest verbunden (z.B. über einen starren Abschnitt 71) oder über einen oder mehrere Kontrollstege 44, die beim Anheben des Griffs 33 brechen.

Auf der Unterseite des Sicherungs- und/oder Kontrollelements 34 ist vorzugsweise eine Erhebung 39 vorgesehen (hier, da verdeckt, mit einer Strichlinie angedeutet), die insbesondere als Haken ausgebildet sein kann.

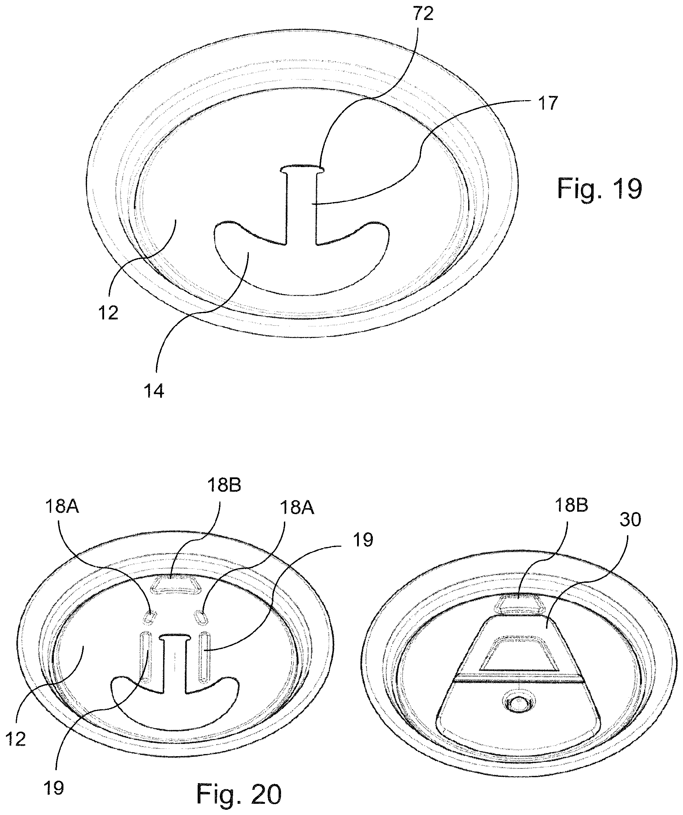

Fig. 19 zeigt ein weiteres optionales Merkmal eines Deckels 12 zur Verwendung mit dem Verschlusssystem. Wie hier gezeigt, kann der Führungsschlitz 17 an seinem von der Trinköffnung 14 abgewandten Ende wenigstens eine oder mehrere Entlastungskerben 72 aufweisen. Das abgewandte Ende kann ein hinteres Ende des Führungsschlitzes 17 sein. Die Entlastungskerben 72 können einen Radius in Ecken von einem ansonsten rechteckigen Querschnitt des Führungsschlitzes 17 bilden. Die Entlastungskerben 72 können beispielsweise so ausgestanzt sein, dass dieses Ende des Führungsschlitzes 17 keinen rechten Winkel aufweist. Dadurch kann bei hohen Innendrücken einem Einreißen des Deckels 12 und/oder einem Aufplatzen des Deckels 12 vorgebeugt werden.

Die eine oder die mehreren Entlastungskerben 72 erstrecken sich vorzugsweise im Wesentlichen senkrecht zur Längsrichtung des Führungsschlitzes 17. Die jeweilige Entlastungskerbe 72 ist vorzugsweise gekrümmt, wobei ein Mittelpunkt des Krümmungskreises vorzugsweise näher am Mittelpunkt des Deckels 12 liegt als die Entlastungskerbe 72. Die jeweilige Entlastungskerbe 72 kann beispielsweise bogenförmig ausgebildet sein. Eine Länge der Entlastungskerbe 72, insbesondere eine Bogenlänge, kann größer als die Breite des Führungsschlitzes 17 senkrecht zu dessen Längsachse sein. Wie der Fachmann unschwer erkennen wird, können solche Entlastungskerben 72 mit jedem der vorgehend beschriebenen Deckel 12 verwendet werden.

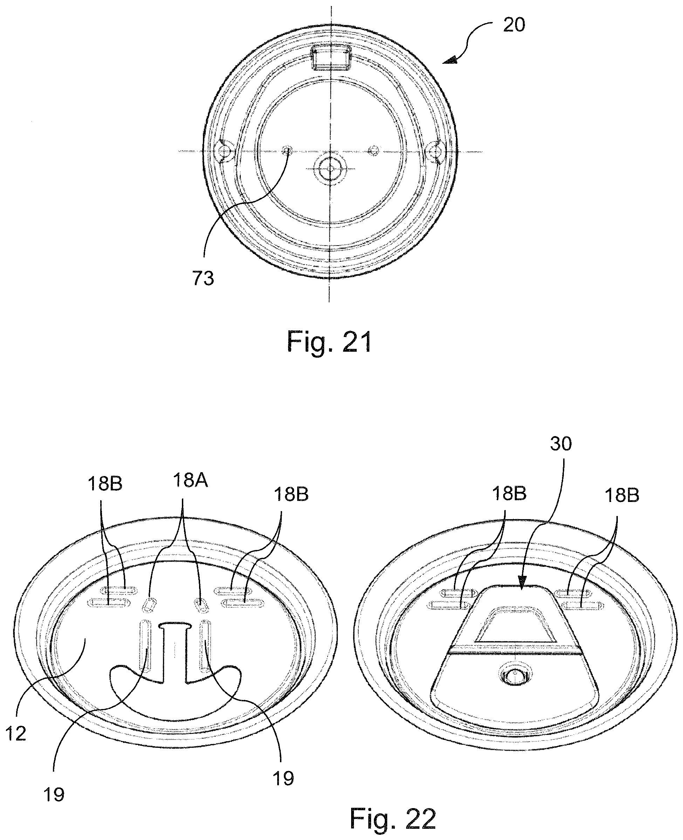

Fig. 20 und 22 zeigen weitere Merkmale und Ausgestaltungen des Deckels 12, die in Kombination mit oder unabhängig von den Entlastungskerben Verwendung finden können. Der Deckel weist hierbei mindestens eine erste Vertiefung 18A oder mehrere Vertiefungen 18A auf, die während dem Öffnen des Verschlusselements 20 und/oder in dessen Offenposition einen ersten Luftkanal bilden können, wie bereits vorgehend beschrieben.

Die mindestens eine erste Vertiefung 18A ist vorzugsweise so angeordnet, dass sie in der Verschlussposition des Verschlusselements 20 innerhalb der Dichtung (in Fig. 20 und 22 nicht gezeigt; siehe den Dichtungsring 50 in Fig. 17a bis 17c) angeordnet ist.

Die mindestens eine erste Vertiefung 18A ist vorzugsweise so angeordnet, dass sie in der Verschlussposition vom Verschlusselement 20 (in Fig. 20 und 22 nicht gezeigt) und/oder vom Bedienelement 30 überdeckt wird, vorzugsweise vollständig.

Bei Verstellung des Verschlusselements 20 in die Offenposition wird vorzugsweise eine Stellung, insbesondere eine Zwischenstellung, erreicht, in der die Dichtung 50 und/oder das Verschlusselement 20 die mindestens eine erste Vertiefung 18A teilweise überlappt. So kann ein Druckausgleich erreicht werden, insbesondere ein initialer Druckausgleich beim Öffnen des Verschlusssystems. Die mindestens eine erste Vertiefung 18A kann so angeordnet sein, dass sie in der Offenposition vollständig vom Verschlusselement 20 überlappt wird und/oder vollständig innerhalb der Dichtung 50 angeordnet ist.

In Kombination mit oder unabhängig von der mindestens einen ersten Vertiefung 18A kann der Deckel 12 mindestens eine zweite Vertiefung 18B aufweisen. Diese ist vorzugsweise so angeordnet, dass sie in der Verschlussposition vom Verschlusselement 20 nicht verdeckt wird und/oder in der Verschlussposition nicht innerhalb der Dichtung 50 angeordnet ist, auch nicht teilweise. Die mindestens eine zweite Vertiefung 18B ist in der Verschlussposition vorzugsweise nicht vom Bedienelement 30 verdeckt. In der Offenstellung wird die mindestens eine zweite Vertiefung vorzugsweise teilweise (insbesondere nur teilweise) vom Verschlusselement 20 und/oder der Dichtung 50 und/oder dem Bedienelement 30 überlappt.

Die zweite Vertiefung kann z.B. als eine oder mehrere Vertiefungen 18B ausgebildet sein, die in Verschieberichtung des Bedienelements 30 hinter dem Bedienelement 30 (siehe Fig. 20) und/oder neben dem Bedienelement 30 angeordnet ist (siehe Fig. 22).

Wie vorgehend beschrieben, können die mindestens eine erste Vertiefung 18A und/oder die mindestens eine zweite Vertiefung 18B nach oben oder nach unten vorstehen. Die mindestens eine erste Vertiefung 18A und/oder die mindestens eine zweite Vertiefung 18B kann insbesondere als Prägung ausgebildet sein.

In Kombination mit oder unabhängig von der mindestens einen ersten Vertiefung 18A und/oder der mindestens einen zweiten Vertiefung 18B kann der Deckel 12 ferner eine oder mehrere (insbesondere zwei) dritte Vertiefungen 19 aufweisen. Diese können mit einem oder mehreren entsprechenden Vorsprüngen 73 auf der Oberseite des Verschlusselements 20 zusammenwirken (siehe Fig. 21), um eine Längsführung und/oder Verdrehsicherung für das Verschlusselement 20 bereitzustellen. Die Vertiefung 19 steht insofern vorzugsweise nach oben vor. Sie kann als eine Prägung im Deckel 12 ausgebildet sein.

Es versteht sich, dass die dargestellten Figuren nur mögliche Ausführungsbeispiele schematisch darstellen. Die verschiedenen Ansätze können ebenso miteinander sowie mit Vorrichtungen, beispielsweise Getränkebehältern, des Stands der Technik kombiniert werden.

Obwohl vorstehend insbesondere eine Dose und ein Dosendeckel beschrieben werden, kann das offenbarte Verschlusssystem auch an anderen Behältern für Flüssigkeiten oder Schüttgut angebracht werden. Solche Flüssigkeitsbehälter können z.B. aus Karton, Plastik und/oder Metall hergestellt sein. Dies gilt insbesondere für Behälter, die zumindest im Bereich einer Ausgussöffnung aus einem Material hergestellt sind, das eine ausreichende Steifigkeit aufweist. Der vorliegend genannte Deckel kann bei einem Flüssigkeitsbehälter z.B. durch eine Wand des Behälters ersetzt sein und/oder durch eine solche Wand gebildet werden.

## Patentansprüche

1. Verschlusssystem (1) für einen Behälter für Flüssigkeit und/oder Schüttgut, insbesondere eine Getränkedose (2) oder Kartonage, aufweisend
- einen Deckel (10), wobei der Deckel (10) eine Oberseite (11), eine Unterseite (12) und eine Trinköffnung (14) aufweist,
- ein Verschlusselement (20) zum Verschließen der Trinköffnung (14), und
- ein Bedienelement (30) zum manuellen Öffnen der Trinköffnung (14) durch einen Benutzer,
wobei
- das Verschlusselement (20) an einer Unterseite (12) des Deckels (10) positioniert ist und mit dem Bedienelement (30) an der Oberseite (11) des Deckels (10) verbunden ist;
- das Verschlusselement (20) zum Verschließen der Trinköffnung (14) dazu ausgestaltet ist, in einer Verschlussposition die Trinköffnung (14) vollflächig abzudecken; und
- das Bedienelement (30) und das Verschlusselement (20) entlang einer ersten Achse (A), die im wesentlichen parallel zur Oberseite (11) des Deckels (10) verläuft, beweglich angeordnet sind, wobei
▪ ein Bewegen des Bedienelements (30) in eine erste Richtung (8) entlang der ersten Achse (A) eine Bewegung des Verschlusselements (20) aus der Verschlussposition und ein Öffnen der Trinköffnung (14) bewirkt, und
▪ ein Bewegen des Bedienelements (30) in eine der ersten Richtung (8) entgegengesetzte zweite Richtung (9) entlang der ersten Achse (A) ein Bewegen des Verschlusselements (20) in die Verschlussposition und ein Wiederverschließen der Trinköffnung (14) bewirkt;
**dadurch gekennzeichnet, dass**
- das Verschlusselement (20) fest mit dem Bedienelement (30) verbunden ist;
- der Deckel (10) mindestens eine Vertiefung (18, 18', 18", 18‴, 18A, 18B) aufweist, die relativ zu der Verschlussposition des Verschlusselements (20) derart angeordnet ist, dass durch die Bewegung des Verschlusselements (20) aus der Verschlussposition, insbesondere eine Bewegung in die erste Richtung (8), die mindestens eine Vertiefung (18, 18', 18", 18‴, 18A, 18B) mindestens teilweise durch das Verschlusselement (20) bedeckt wird; und
- die mindestens eine Vertiefung (18, 18', 18", 18‴, 18A, 18B) derart angeordnet ist, und das Verschlusselement (20) derart dimensioniert ist, dass
▪ bei der Bewegung des Verschlusselements (20) aus der Verschlussposition und/oder in der Offenposition des Verschlusselements (20) die mindestens eine Vertiefung (18, 18', 18", 18‴, 18A, 18B) mindestens teilweise durch das Verschlusselement (20) bedeckt wird, und
▪ ein Gasaustausch (7a, 7b) zum Ausgleich eines Überdrucks und/oder Unterdrucks in dem Getränkebehälter ermöglicht wird, wenn die mindestens eine Vertiefung (18, 18', 18", 18‴, 18A, 18B) teilweise durch das Verschlusselement (20) bedeckt ist.

2. Verschlusssystem (1) nach Anspruch 1, **dadurch gekennzeichnet, dass** die feste Verbindung des Verschlusselements und des Bedienelements durch eine Schweißverbindung, eine Klebverbindung oder eine Nietverbindung erfolgt.

3. Verschlusssystem nach Anspruch 1 oder Anspruch 2, **dadurch gekennzeichnet,**
- **dass** das Verschlusssystem mindestens ein Sicherungs- und/oder Kontrollelement (34, 40, 45) aufweist, wobei das Sicherungs- und/oder Kontrollelement (34) an seiner Unterseite eine Erhebung (39) aufweist, die derart angeordnet ist, dass sie bei der Bewegung des Bedienelements (30) in der ersten Richtung (8) mit dem Deckel (10) zusammenstößt;
- vorzugsweise wobei:
▪ die Trinköffnung einen Führungsschlitz aufweist und die Erhebung mit einem Ende des Führungsschlitzes in der ersten Richtung zusammenstößt; und/oder
▪ das Sicherungs- und/oder Kontrollelement (34) mit dem Bedienelement (30) über ein Scharnier (70) verbunden ist, insbesondere über ein Filmscharnier, wobei das Filmscharnier vorzugsweise eine Kippachse definiert, die orthogonal zur ersten Achse ist; und/oder
▪ das Verschlusselement (20) eine Vertiefung (26) aufweist, wobei die Erhebung (39) in die Vertiefung (26) hineinragt.

4. Verschlusssystem nach einem der vorgehenden Ansprüche, **dadurch gekennzeichnet, dass** das Verschlusssystem mindestens ein Sicherungs- und/oder Kontrollelement (34, 40, 45) aufweist,
wobei das Kontrollelement derart ausgestaltet ist, dass es
- einen ersten Zustand aufweist, solange das Bedienelement (30) nicht bewegt wird, und/oder das Verschlusselement (20) nicht aus der Verschlussposition bewegt wird, und
- irreversibel einen vom ersten Zustand zumindest optisch unterscheidbaren zweiten Zustand einnimmt, wenn das Bedienelement (30) in die erste Richtung (8) bewegt wird, und/oder das Verschlusselement (20) aus der Verschlussposition bewegt wird,
insbesondere wobei
- das Sicherungs- und/oder Kontrollelement (34, 40, 45) den zweiten Zustand auch dann beibehält, wenn das Bedienelement (30) in die zweite Richtung (9) zurückbewegt wird, und/oder das Verschlusselement (20) in die Verschlussposition zurückbewegt wird.

5. Verschlusssystem nach einem der Ansprüche 3 oder 4, **dadurch gekennzeichnet, dass** das Bedienelement (30) mit dem Sicherungs- und/oder Kontrollelement (34) einstückig ausgeführt ist;
vorzugsweise wobei:
- das Bedienelement (30) und das Sicherungs- und/oder Kontrollelement (34) aus Aluminium bestehen; oder
- das Bedienelement (30) und das Sicherungs- und/oder Kontrollelement (34) aus Kunststoff bestehen.

6. Verschlusssystem nach einem der Ansprüche 3 bis 5,
**dadurch gekennzeichnet, dass**
das Sicherungs- und/oder Kontrollelement (34, 40) mindestens einen von außen sichtbar angebrachten Kontrollsteg (36, 42) aufweist, der derart angeordnet und beschaffen ist, dass er gebrochen wird, wenn das Bedienelement (30) in die erste Richtung (8) bewegt wird, und/oder das Verschlusselement (20) aus der Verschlussposition bewegt wird, insbesondere wobei der mindestens eine Kontrollsteg (36, 42) eine Sollbruchstelle aufweist.

7. Verschlusssystem nach Anspruch 6,
**dadurch gekennzeichnet, dass**
das Sicherungs- und/oder Kontrollelement (34) derart angeordnet und beschaffen ist, dass durch die Bewegung des Bedienelements (30) in der ersten Richtung (8) eine Ausweichbewegung (5, 6) des Kontrollelements (34) bewirkt wird, durch welche ein Brechen des mindestens einen Kontrollstegs (36) erfolgt, insbesondere wobei
- das Kontrollelement (34) am Bedienelement (30) um eine zur ersten Achse (A) orthogonale Kippachse (C) beweglich angebracht ist,
- der mindestens eine Kontrollsteg (36) am Kontrollelement (34) und am Bedienelement (30) befestigt ist,
- das Kontrollelement (34) derart angeordnet ist, dass es bei einer Bewegung des Bedienelements (30) in der ersten Richtung (8) mit dem Deckel (10) zusammenstößt, wobei die Ausweichbewegung (5, 6) zumindest teilweise durch das Zusammenstoßen bewirkt wird, und
- die Ausweichbewegung ein Kippen (6) des Kontrollelements (34) um die Kippachse (C) beinhaltet;
insbesondere wobei das Kontrollelement (34) an seiner Unterseite eine Erhebung (39) aufweist, die derart angeordnet ist, dass sie bei der Bewegung des Bedienelements (30) in der ersten Richtung (8) mit dem Deckel (10) zusammenstößt, insbesondere wobei
- die Ausweichbewegung (5, 6) zumindest teilweise durch das Zusammenstoßen bewirkt wird,
- die Erhebung (39) am Rande der Trinköffnung (14) oder am Ende eines Führungsschlitzes (17) der Trinköffnung (14) am Deckel (10) anliegt; und/oder
- das Verschlusselement (20) eine Vertiefung (26) aufweist, wobei die Erhebung (39) in die Vertiefung (26) hineinragt.

8. Verschlusssystem nach einem der vorangehenden Ansprüche, **dadurch gekennzeichnet, dass**
die Trinköffnung einen Führungsschlitz aufweist; vorzugsweise wobei:
- der Führungsschlitz (17) entlang der ersten Achse (A) verläuft, und
- das Bedienelement (30) und/oder das
Verschlusselement (20) ein Führungselement aufweisen, das in den Führungsschlitz eingreift, sodass das Bedienelement (8) ausschließlich entlang der ersten Achse (A) beweglich ist,
insbesondere wobei das Führungselement das Bedienelement (30) und das Verschlusselement (20) fest miteinander verbindet.

9. Verschlusssystem nach einem der vorangehenden Ansprüche, **dadurch gekennzeichnet, dass**
- das Verschlusselement (20) mindestens eine Kerbe (23) aufweist, wobei die mindestens eine Kerbe (23) derart angeordnet ist, dass bei einer Bewegung des Verschlusselements (20) aus der Verschlussposition das Öffnen der Trinköffnung (14) zuerst durch die Kerbe (23) erfolgt, insbesondere wobei die Kerbe (23) derart angeordnet ist, dass sie auf der ersten Achse (A) positioniert ist, wenn das Verschlusselement (20) sich in der Verschlussposition befindet; und/oder
- der Deckel (10) eine Kerbe (15) oder eine Öffnung (16) aufweist, und das Verschlusselement dazu ausgestaltet ist, die Kerbe (15) oder Öffnung (16) in der Verschlussposition abzudecken, wobei die Kerbe (15) oder Öffnung (16) an oder neben der Trinköffnung (14) derart angeordnet ist, dass bei einer Bewegung des Verschlusselements (20) aus der Verschlussposition die Kerbe (15) oder Öffnung (16) vor der Trinköffnung (14) geöffnet wird, wobei die Kerbe (15) oder Öffnung (16) vorzugsweise auf der ersten Achse (A) angeordnet ist.

10. Verschlusssystem nach einem der vorangehenden Ansprüche, **dadurch gekennzeichnet, dass** die Vertiefung in die Oberseite (11) oder die Unterseite (12) des Deckels (10) geprägt oder gestanzt ist.

11. Verschlusssystem nach einem der vorangehenden Ansprüche, **dadurch gekennzeichnet, dass**
- die mindestens eine Vertiefung (18, 18', 18", 18‴, 18A, 18B) in der Unterseite (12) des Deckels (10) angebracht ist, und der Gasaustausch (7a, 7b) durch die mindestens eine Vertiefung (18, 18', 18", 18‴, 18A, 18B) hindurch erfolgt; oder
- die mindestens eine Vertiefung (18, 18', 18", 18‴,18A, 18B) so in der Oberseite (12) des Deckels (10) angebracht ist, dass auf der Unterseite (12) des Deckels (10) eine der Vertiefung entsprechende Erhebung besteht, wobei das Verschlusselement (20) beim Abdecken der mindestens einen Vertiefung (18, 18', 18", 18‴, 18A, 18B) durch die Erhebung von der Unterseite (12) des Deckels (10) distanziert wird, und der Gasaustausch (7a, 7b) an der mindestens einen Erhebung vorbei erfolgt.

12. Verschlusssystem nach einem der vorangehenden Ansprüche, **dadurch gekennzeichnet, dass**
- das Bedienelement (30) und das Verschlusselement (20) aus Aluminium bestehen, insbesondere wobei eine feste Verbindung des Verschlusselements (20) und des Bedienelements (30) durch eine Schweißverbindung, eine Nietverbindung und/oder eine Rastverbindung erfolgt; und/oder
- das Bedienelement (30) und/oder das Verschlusselement (20) aus Kunststoff besteht, insbesondere wobei das Bedienelement (30) und das Verschlusselement (20) aus demselben Kunststoff bestehen und/oder eine feste Verbindung des Verschlusselements (20) und des Bedienelements (30) durch eine Schweißverbindung, eine Klebverbindung und/oder eine Rastverbindung erfolgt, insbesondere eine Ultraschall- oder Reibschweißverbindung.

13. Verschlusssystem nach einem der vorangehenden Ansprüche, **dadurch gekennzeichnet, dass**
das Verschlusselement (20) einen Befestigungsbolzen (28) aufweist, und das Bedienelement (30) eine Aussparung (38) aufweist, wobei der Befestigungsbolzen zur festen Verbindung des Verschlusselements (20) und des Bedienelements (30) in die Aussparung eingefügt ist, wobei der Befestigungsbolzen (28) in einen Führungsschlitz (17) der Trinköffnung (14) eingreift, der entlang der ersten Achse (A) verläuft.

14. Verschlusssystem nach einem der vorangehenden Ansprüche, **dadurch gekennzeichnet, dass**
- das Bedienelement (30) einen am Dosendeckel anliegenden Griff (33) aufweist,
- wobei der Griff (33) durch eine Schwenkbewegung (7) um eine Schwenkachse, die vorzugsweise zu der ersten Achse (A) orthogonal ist, aufstellbar ist, vorzugsweise um mindestens 45°, insbesondere mindestens 60°;
- vorzugsweise wobei:
▪ die Schwenkbewegung (7) in Richtung der zweiten Richtung (9) erfolgt; und/oder
▪ das Bedienelement (30) mit dem Griff (33) einstückig ausgeführt ist, vorzugsweise wobei eine als Scharnier wirkende Einkerbung (37) entlang der Schwenkachse verläuft.

15. Getränkedose (2), aufweisend einen zylindrischen Körper zur Aufnahme von Flüssigkeiten, insbesondere kohlensäurehaltigen Getränken,
**gekennzeichnet durch**
ein Verschlusssystem (1) nach einem der vorangehenden Ansprüche.

## Claims

1. A closure system (1) for a container for liquids and/or bulk material, particularly a beverage can (2) or cardboard packaging, comprising
- a lid (10), wherein the lid (10) comprises an upper side (11), a lower side (12) and a drinking orifice (14),
- a closure member (20) for closing the drinking orifice (14), and
- an operating member (30) for manually opening the drinking orifice (14) by a user, wherein
- the closure member (20) is positioned at a lower side (12) of the lid (10) and connected with the operating member (30) at the upper side (11) of the lid (10);
- the closure member (20) for closing the drinking orifice (14) is configured to cover the entire surface of the drinking orifice (14) in a closed position; and
- the operating member (30) and the closure member (20) are disposed movably along a first axis (A) extending substantially parallel to the upper side (11) of the lid (10); wherein
▪ moving of the operating member (30) into a first direction (8) along the first axis (A) causes movement of the closure member (20) from the closed position and opening of the drinking orifice (14), and
▪ moving of the operating member (30) into a second direction (9) opposite the first direction (8) along the first axis (A) causes movement of the closure member (20) into the closed position and reclosure of the drinking orifice (14);
**characterized in that**
- the closure member (20) is fixedly connected with the operating member (30);
- the lid (10) comprises at least one recess (18, 18', 18", 18‴, 18A, 18B) which is disposed relative to the closure position of the closure member (20) such that the at least one recess (18, 18', 18", 18‴, 18A, 18B) is at least partially covered by the closure member (20) when the closure member (20) is moved from the closed position, particularly in the first direction (8),
- the at least one recess (18, 18', 18", 18"', 18A, 18B) is disposed and the closure member (20) is dimensioned such that
▪ the at least one recess (18, 18', 18", 18‴, 18A, 18B) is at least partially overlapped by the closure member (20) when the closure member (20) is moved from the closed position and/or when the closure member (20) is in the open position, and
▪ a gas exchange (7a, 7b) for compensating an overpressure and/or underpressure within the beverage container, is allowed for if the at least one recess (18, 18', 18", 18"', 18A, 18B) is partially overlapped by the closure member (20).

2. The closure system (1) according to claim 1,
**characterized in that**
- the fixed connection of the closure member and the operating member is achieved by a welded joint, an adhesive joint or a rivet joint.

3. The closure system according to claim 1 or claim 2,
**characterized in that,**
- the closure system comprises at least one control member (34, 40, 45), wherein, at its lower side the control member (34) comprises an elevation (39) which is disposed such that it collides with the lid (10) if the operating member (30) is moved in the first direction (8);
- particularly wherein
▪ the drinking orifice comprises a guide slot and the elevation abuts an end of the guide slot in the first direction; and/or
▪ the control member (34) is attached to the operating member (30) by means of a hinge (70), in particular by means of a living hinge, wherein the living hinge preferably defines a tilting axis orthogonal to the first axis (A); and/or
▪ the closure member (20) comprises a recess (26), wherein the elevation (39) extends into the recess (26).

4. The closure system according to any one of the preceding claims,
**characterized in that** the closure member comprises at least one control member (34, 40, 45),
wherein the control member is configured such that it
- comprises a first state as long as the operating member (30) is not moved and/or the closure member (20) is not moved from the closed position, and
- irreversibly assumes a second state, which is at least optically distinguishable from the first state, if the operating member (30) is moved into the first direction (8) and/or if the closure member (20) is moved from the closed position,
particularly wherein
- the control member (34, 40, 45) retains the second state even if the operating member (30) is moved back into the second direction (9) and/or the closure member (20) is moved back into the closed position.

5. The closure system according to any one of claim 3 or 4,
**characterized in that** the operating member (30) is configured integrally with the control member (34);
particularly wherein:
- the operating member (30) and the control member (34) consist of aluminum; or
- the operating member (30) and the control member (34) consist of a plastic material.

6. The closure system according to any one of claim 3 to 5,
**characterized in that**
the control member (34, 40) comprises at least one control bar (36, 42) visibly attached from the outside, said control bar (36, 42) being disposed and configured such that it breaks if the operating member (30) is moved into the first direction (8) and/or the closure member (20) is moved from the closed position, particularly wherein the at least one control bar (36, 42) comprises a predetermined breaking point.

7. The closure system according to claim 6,
**characterized in that**
the control member (34) is disposed and configured such that the movement of the operating member (30) in the first direction (8) causes a swerving movement (5, 6) of the control member (34), thus causing breaking of the at least one control bar (36), particularly wherein
- the control member (34) is attached to the operating member (30) about a tilting axis (C) orthogonal to the first axis (A),
- the at least one control bar (36) is attached to the control member (34) and the operating member (30),
- the control member (34) is arranged such that it collides with the lid (10) if the operating member (30) is moved in the first direction (8), wherein the swerving movement (5, 6) is at least partially caused by the collision, and
the swerving movement involves tilting (6) of the control member (34) about the tilting axis (C);
particularly wherein
at its lower side the control member (34) comprises an elevation (39) which is disposed such that it collides with the lid (10) if the operating member (30) is moved in the first direction (8), particularly wherein
- the swerving movement (5, 6) is at least partially caused by the collision,
- the elevation (39) abuts the lid (10) at the edge of the drinking orifice (14) or at the end of a guide slot (17) of the drinking orifice (14); and/or
- the closure member (20) comprises a recess (26), wherein the elevation (39) extends into the recess (26).

8. The closure system according to any one of the preceding claims,
**characterized in that**
the drinking orifice comprises a guide slot;
preferably wherein:
- the guide slot (17) extends along a first axis (A), and
- the operating member (30) and/or the closure member (20) comprises a guide member engaging the guide slot (17) so that the operating member (8) is movable along the first axis (A) only,
particularly wherein the guide member fixedly connects the operating member (30) with the closure member (20).

9. The closure system according to any one of the preceding claims,
**characterized in that**
- the closure member (20) comprises at least one indentation (23), wherein the at least one indentation (23) is arranged such that, during a movement of the closure member (20) from the closed position, opening of the drinking orifice (14) initially occurs by the indentation (23), particularly wherein the indentation (23) is arranged such that it is positioned on the first axis (A) when the closure member (20) is in the closed position; and/or
- the lid (10) comprises an indentation (15) or an orifice (16), and the closure member is configured to cover the indentation (15) or orifice (16) in the closed position, wherein the indentation (15) or orifice (16) is disposed at or next to the drinking orifice (14) such that the indentation (15) or orifice (16) is opened prior to the drinking orifice (14) during a movement of the closure member (20) from the closed position, wherein the indentation (15) or the orifice (16) is preferably arranged at the first axis (A).

10. The closure system according to any one the preceding claims,
**characterized in that** the recess is embossed or punched into the upper side (11) or the lower side (12) of the lid (10).

11. The closure system according to any one of the preceding claims,
- **characterized in that** the at least one recess (18, 18', 18", 18‴, 18A, 18B) is provided in the lower side (12) of the lid (10), and the gas exchange (7a, 7b) takes place by passing through the at least one recess (18, 18', 18", 18‴, 18A, 18B); or
- the at least one recess (18, 18', 18", 18"', 18A, 18B) is provided in the upper side (12) of the lid (10) such that an elevation corresponding to the recess is present at the lower side (12) of the lid (10), wherein the closure member (20) is distanced from the lower side (12) of the lid (10) by the elevation when the at least one recess (18, 18', 18", 18"', 18A, 18B) is overlapped, and the gas exchange (7a, 7b) takes place by passing the at least one elevation.

12. The closure system according to any one of the preceding claims,
**characterized in that**
- the operating member (30) and the closure member (20) consist of aluminum, particularly wherein a fixed connection of the closure member (20) and the operating member (30) is achieved by a welded joint and/or a snap-in connection; and/or
- the operating member (30) and/or the closure member (20) consists of a plastic material, particularly wherein the operating member (30) and the closure member (20) consist of the same plastic material, and/or a fixed connection of the closure member (20) and the operating member (30) is achieved by an adhesive joint and/or a snap-in connection, particularly an ultrasonic or friction welding.

13. The closure system according to any one of the preceding claims,
**characterized in that**
the closure member (20) comprises a fixing bolt (28) and the operating member (30) comprises a cavity (38), wherein the fixing bolt is inserted into the cavity for fixedly connecting the closure member (20) and the operating member (30), wherein the fixing bolt (28) engages a guide slot (17) of the drinking orifice (14), said guide slot (17) extending along the first axis (A).

14. The closure system according to any one of the preceding claims,
**characterized in that**
- the operating member (30) comprises a handle (33) abutting the lid of the can,
- wherein the handle (33) may be raised preferably by at least 45°, particularly at least 90°, by means of a swiveling movement (7) about a swivel axis which is preferably orthogonal to the first axis (A),
- particularly wherein:
▪ the swivel movement (7) takes place in the direction of the second direction (9), and/or
▪ the operating member (30) is configured integrally with the handle (33), preferably wherein a notch (37) acting as a hinge extends along the swivel axis.

15. A beverage can (2) comprising a cylindrical body for receiving liquids, particularly carbonated liquids,
**characterized by**
a closure system (1) according to any one of the preceding claims.

## Revendications

1. Système de fermeture (1) pour un récipient destiné à contenir un liquide et/ou un produit en vrac, en particulier une canette de boisson (2) ou un emballage en carton, comprenant
- un couvercle (10), le couvercle (10) présentant une face supérieure (11), une face inférieure (12) et une ouverture de boisson (14),
- un élément de fermeture (20) destiné à fermer l'ouverture de boisson (14), et
- un élément de commande (30) destiné à l'ouverture manuelle de l'ouverture de boisson (14) par un utilisateur,
où
- l'élément de fermeture (20) est positionné sur une face inférieure (12) du couvercle (10) et est relié à l'élément de commande (30) sur la face supérieure (11) du couvercle (10) ;
- l'élément de fermeture (20) est conçu, pour fermer l'ouverture de boisson (14), de manière à recouvrir intégralement l'ouverture de boisson (14) dans une position de fermeture ; et
- l'élément de commande (30) et l'élément de fermeture (20) sont montés mobiles le long d'un premier axe (A), qui s'étend sensiblement parallèlement à la face supérieure (11) du couvercle (10), où
▪ un déplacement de l'élément de commande (30) dans une première direction (8) le long du premier axe (A) provoque un déplacement de l'élément de fermeture (20) hors de la position de fermeture et une ouverture de l'ouverture de boisson (14), et
▪ un déplacement de l'élément de commande (30) dans une seconde direction (9) opposée à la première direction (8) le long du premier axe (A) provoque un déplacement de l'élément de fermeture (20) dans la position de fermeture et une refermeture de l'ouverture de boisson (14) ;
**caractérisé en ce que**
- l'élément de fermeture (20) est relié de manière fixe à l'élément de commande (30) ;
- le couvercle (10) présente au moins un évidement (18, 18', 18", 18"', 18A, 18B), lequel est disposé, par rapport à la position de fermeture de l'élément de fermeture (20), de telle sorte que, par le déplacement de l'élément de fermeture (20) hors de la position de fermeture, en particulier un déplacement dans la première direction (8), ledit au moins un évidement (18, 18', 18", 18"', 18A, 18B) soit au moins partiellement recouvert par l'élément de fermeture (20) ; et
- ledit au moins un évidement (18, 18', 18", 18"', 18A, 18B) est disposé de telle sorte, et l'élément de fermeture (20) est dimensionné de telle sorte que
▪ lors du déplacement de l'élément de fermeture (20) hors de la position de fermeture et/ou dans la position ouverte de l'élément de fermeture (20), ledit au moins un évidement (18, 18', 18", 18"', 18A, 18B) soit au moins partiellement recouvert par l'élément de fermeture (20), et
▪ un échange gazeux (7a, 7b) permettant l'équilibrage d'une surpression et/ou d'une dépression dans le récipient à boisson soit rendu possible lorsque ledit au moins un évidement (18, 18', 18", 18"', 18A, 18B) est partiellement recouvert par l'élément de fermeture (20).

2. Système de fermeture (1) selon la revendication 1, **caractérisé en ce que** la liaison fixe de l'élément de fermeture et de l'élément de commande est réalisée par un assemblage soudé, un assemblage collé ou un assemblage riveté.

3. Système de fermeture selon la revendication 1 ou la revendication 2,
**caractérisé en ce que**
- le système de fermeture présente au moins un élément de sécurité et/ou de contrôle (34, 40, 45), l'élément de sécurité et/ou de contrôle (34) présentant sur sa face inférieure une saillie (39) disposée de telle sorte qu'elle vient en butée contre le couvercle (10) lors du déplacement de l'élément de commande (30) dans la première direction (8) ;
- de préférence, où :
▪ l'ouverture de boisson présente une fente de guidage et la saillie vient en butée contre une extrémité de la fente de guidage dans la première direction ; et/ou
▪ l'élément de sécurité et/ou de contrôle (34) est relié à l'élément de commande (30) par une charnière (70), en particulier par une charnière-film, la charnière-film définissant de préférence un axe de basculement orthogonal au premier axe ; et/ou
▪ l'élément de fermeture (20) présente un évidement (26), la saillie (39) pénétrant dans l'évidement (26).

4. Système de fermeture selon l'une quelconque des revendications précédentes,
**caractérisé en ce que** le système de fermeture présente au moins un élément de sécurité et/ou de contrôle (34, 40, 45),
l'élément de contrôle étant conçu de telle sorte qu'il
- présente un premier état tant que l'élément de commande (30) n'est pas déplacé et/ou que l'élément de fermeture (20) n'est pas déplacé hors de la position de fermeture, et
- adopte de manière irréversible un second état au moins visuellement distinct du premier état lorsque l'élément de commande (30) est déplacé dans la première direction (8) et/ou que l'élément de fermeture (20) est déplacé hors de la position de fermeture,
en particulier où
- l'élément de sécurité et/ou de contrôle (34, 40, 45) conserve le second état même lorsque l'élément de commande (30) est déplacé en retour dans la seconde direction (9) et/ou que l'élément de fermeture (20) est déplacé en retour dans la position de fermeture.

5. Système de fermeture selon l'une quelconque des revendications 3 ou 4, **caractérisé en ce que** l'élément de commande (30) est réalisé d'une seule pièce avec l'élément de sécurité et/ou de contrôle (34) ;
de préférence, où :
- l'élément de commande (30) et l'élément de sécurité et/ou de contrôle (34) sont en aluminium ; ou
- l'élément de commande (30) et l'élément de sécurité et/ou de contrôle (34) sont en matière plastique.

6. Système de fermeture selon l'une quelconque des revendications 3 à 5,
**caractérisé en ce que**
l'élément de sécurité et/ou de contrôle (34, 40) présente au moins une nervure de contrôle (36, 42) disposée de manière visible de l'extérieur, laquelle est disposée et conçue de telle sorte qu'elle se rompe lorsque l'élément de commande (30) est déplacé dans la première direction (8) et/ou que l'élément de fermeture (20) est déplacé hors de la position de fermeture, en particulier où ladite au moins une nervure de contrôle (36, 42) présente une zone de rupture prédéterminée.

7. Système de fermeture selon la revendication 6,
**caractérisé en ce que**
l'élément de sécurité et/ou de contrôle (34) est disposé et conçu de telle sorte que le déplacement de l'élément de commande (30) dans la première direction (8) provoque un mouvement d'évitement (5, 6) de l'élément de contrôle (34), par lequel se produit une rupture de ladite au moins une nervure de contrôle (36), en particulier où
- l'élément de contrôle (34) est monté mobile sur l'élément de commande (30) autour d'un axe de basculement (C) orthogonal au premier axe (A),
- ladite au moins une nervure de contrôle (36) est fixée à l'élément de contrôle (34) et à l'élément de commande (30),
- l'élément de contrôle (34) est disposé de telle sorte qu'il vient en butée contre le couvercle (10) lors d'un déplacement de l'élément de commande (30) dans la première direction (8), le mouvement d'évitement (5, 6) étant provoqué au moins partiellement par cette butée, et
- le mouvement d'évitement comprend un basculement (6) de l'élément de contrôle (34) autour de l'axe de basculement (C) ;
en particulier où l'élément de contrôle (34) présente sur sa face inférieure une saillie (39) disposée de telle sorte qu'elle vient en butée contre le couvercle (10) lors du déplacement de l'élément de commande (30) dans la première direction (8), en particulier où
- le mouvement d'évitement (5, 6) est provoqué au moins partiellement par cette butée,
- la saillie (39) est en appui au bord de l'ouverture de boisson (14) ou à l'extrémité d'une fente de guidage (17) de l'ouverture de boisson (14) sur le couvercle (10) ; et/ou
- l'élément de fermeture (20) présente un évidement (26), la saillie (39) pénétrant dans l'évidement (26).

8. Système de fermeture selon l'une quelconque des revendications précédentes,
**caractérisé en ce que**
l'ouverture de boisson présente une fente de guidage ; de préférence, où :
- la fente de guidage (17) s'étend le long du premier axe (A), et
- l'élément de commande (30) et/ou l'élément de fermeture (20) présentent un élément de guidage qui s'engage dans la fente de guidage, de sorte que l'élément de commande (8) est mobile exclusivement le long du premier axe (A),
en particulier où l'élément de guidage relie fixement l'élément de commande (30) et l'élément de fermeture (20).

9. Système de fermeture selon l'une quelconque des revendications précédentes,
**caractérisé en ce que**
- l'élément de fermeture (20) présente au moins une encoche (23), ladite au moins une encoche (23) étant disposée de telle sorte que, lors d'un déplacement de l'élément de fermeture (20) hors de la position de fermeture, l'ouverture de l'ouverture de boisson (14) s'effectue d'abord par l'encoche (23), en particulier où l'encoche (23) est disposée de telle sorte qu'elle est positionnée sur le premier axe (A) lorsque l'élément de fermeture (20) se trouve dans la position de fermeture ; et/ou
- le couvercle (10) présente une encoche (15) ou une ouverture (16), et l'élément de fermeture est conçu pour recouvrir l'encoche (15) ou l'ouverture (16) dans la position de fermeture, l'encoche (15) ou l'ouverture (16) étant disposée sur ou à côté de l'ouverture de boisson (14) de telle sorte que, lors d'un déplacement de l'élément de fermeture (20) hors de la position de fermeture, l'encoche (15) ou l'ouverture (16) soit ouverte avant l'ouverture de boisson (14), l'encoche (15) ou l'ouverture (16) étant de préférence disposée sur le premier axe (A).

10. Système de fermeture selon l'une quelconque des revendications précédentes, **caractérisé en ce que** l'évidement est embouti ou poinçonné dans la face supérieure (11) ou la face inférieure (12) du couvercle (10).

11. Système de fermeture selon l'une quelconque des revendications précédentes, **caractérisé en ce que**
- ledit au moins un évidement (18, 18', 18", 18‴, 18A, 18B) est ménagé dans la face inférieure (12) du couvercle (10), et l'échange gazeux (7a, 7b) s'effectue à travers ledit au moins un évidement (18, 18', 18", 18"', 18A, 18B) ; ou
- ledit au moins un évidement (18, 18', 18", 18‴, 18A, 18B) est ménagé dans la face supérieure (12) du couvercle (10) de telle sorte qu'il existe sur la face inférieure (12) du couvercle (10) une saillie correspondant à l'évidement, l'élément de fermeture (20) étant, lors du recouvrement dudit au moins un évidement (18, 18', 18", 18"', 18A, 18B), écarté de la face inférieure (12) du couvercle (10) par ladite saillie, et l'échange gazeux (7a, 7b) s'effectuant en passant au-delà de ladite au moins une saillie.

12. Système de fermeture selon l'une quelconque des revendications précédentes, **caractérisé en ce que**
- l'élément de commande (30) et l'élément de fermeture (20) sont en aluminium, en particulier où une liaison fixe de l'élément de fermeture (20) et de l'élément de commande (30) est réalisée par un assemblage soudé, un assemblage riveté et/ou un assemblage par encliquetage ; et/ou
- l'élément de commande (30) et/ou l'élément de fermeture (20) est en matière plastique, en particulier où l'élément de commande (30) et l'élément de fermeture (20) sont réalisés dans la même matière plastique et/ou une liaison fixe de l'élément de fermeture (20) et de l'élément de commande (30) est réalisée par un assemblage soudé, un assemblage collé et/ou un assemblage par encliquetage, en particulier un assemblage par soudage ultrasonique ou par soudage par friction.

13. Système de fermeture selon l'une quelconque des revendications précédentes, **caractérisé en ce que** l'élément de fermeture (20) présente un boulon de fixation (28), et l'élément de commande (30) présente un évidement (38), le boulon de fixation étant inséré dans l'évidement pour assurer la liaison fixe de l'élément de fermeture (20) et de l'élément de commande (30), le boulon de fixation (28) s'engageant dans une fente de guidage (17) de l'ouverture de boisson (14), qui s'étend le long du premier axe (A).

14. Système de fermeture selon l'une quelconque des revendications précédentes, **caractérisé en ce que**
- l'élément de commande (30) présente une poignée (33) reposant contre le couvercle de la canette,
- la poignée (33) pouvant être redressée par un mouvement de pivotement (7) autour d'un axe de pivotement, de préférence orthogonal au premier axe (A), de préférence d'au moins 45°, en particulier d'au moins 60° ;
- de préférence, où :
▪ le mouvement de pivotement (7) s'effectue en direction de la seconde direction (9) ; et/ou
▪ l'élément de commande (30) est réalisé d'une seule pièce avec la poignée (33), de préférence où une entaille (37) agissant comme charnière s'étend le long de l'axe de pivotement.

15. Canette de boisson (2), comprenant un corps cylindrique destiné à contenir des liquides, en particulier des boissons gazeuses,
**caractérisée par**
un système de fermeture (1) selon l'une quelconque des revendications précédentes.
